# EUROPÄISCHE PATENTSCHRIFT

(11) **EP 4 105 519 B1**
(45) Veröffentlichungstag und Bekanntmachung des Hinweises auf die Patenterteilung: **13.08.2025**
(21) Anmeldenummer: 22174970.8
(22) Anmeldetag: 24.05.2022
(51) Int. Cl.: F16H 37/04, F16H 3/64

(54) **GETRIEBE UND LANDWIRTSCHAFTLICHES ODER INDUSTRIELLES NUTZFAHRZEUG**
TRANSMISSION AND AGRICULTURAL OR INDUSTRIAL UTILITY VEHICLE
TRANSMISSION ET VÉHICULE UTILITAIRE AGRICOLE OU INDUSTRIEL

(30) Priorität: 16.06.2021 DE 102021115610; 16.06.2021 DE 102021115606; 16.06.2021 DE 102021115607; 16.06.2021 DE 102021115608; 16.06.2021 DE 102021115609
(43) Veröffentlichungstag der Anmeldung: 21.12.2022
(73) Patentinhaber: Deere & Company, Moline, IL 61265 (US)
(72) Erfinder: SHINDE, PRADIP, 68163 Mannheim (DE); LUBBEN, JEFFREY L, 68163 Mannheim (DE)
(74) Vertreter: Stein, Stefan

(56) Entgegenhaltungen:
- WO-A1-2018/087199
- CN-B- 105 299 155
- CN-B- 109 578 535
- DE-A1- 19 949 507
- US-A1- 2019 085 959

## Beschreibung

Die Erfindung betrifft ein Getriebe gemäss dem Oberbegriff des unabhängigen Anspruchs 1 und ein landwirtschaftliches oder industrielles Nutzfahrzeug gemäss dem Anspruch 13.

In landwirtschaftlichen oder industriellen Nutzfahrzeugen, bevorzugt landwirtschaftlichen oder industriellen Zugfahrzeugen, besonders bevorzugt Traktoren oder Schleppern, kommen heute eine Vielzahl unterschiedlicher Getriebe, z. B. stufenlose Getriebe (IVT), teillastschaltbare Getriebe (PPST) oder volllastschaltbare Getriebe (PST) zum Einsatz. Die Getriebe ermöglichen den Vortrieb des Nutzfahrzeugs auch unter hoher Zuglast, beispielsweise verursacht durch ein daran angebautes Arbeitsgerät wie ein Bodenbearbeitungsgerät (z.B. Pflug) oder dergleichen, über eine bloße Veränderung der Antriebsmotordrehzahl hinaus unterbrechungsfrei verändern zu können. Dabei ist im Allgemeinen das Getriebe eines Nutzfahrzeugs in eine höhere Antriebsstrangarchitektur des gesamten Nutzfahrzeugs eingebettet. Eine übliche Antriebsstrangarchitektur sieht einen Antriebsmotor oder Motor und ein Getriebe vor. Diese können entlang einer Fahrzeuglängsachse, also einer Längsachse des Nutzfahrzeugs, die eine in eine Längsrichtung des Nutzfahrzeugs verlaufenden Achse ist, oder entlang einer Vorwärtsfahrrichtung des Fahrzeugs, insbesondere in einer vorderen Hälfte des Nutzfahrzeugs, angeordnet sein. Das Nutzfahrzeug, insbesondere der Antriebsmotor, kann eine Kurbelwelle umfassen, die insbesondere in der Nähe oder entlang einer Fahrzeugmittelebene, insbesondere einer vertikalen Fahrzeugmittelebene angeordnet sein kann. Mit dem Getriebe kann eine Kraft und/oder ein Drehmoment vom Antriebsmotor an die Bodeneingriffsmitteln, beispielsweise Räder und/oder Ketten und/oder Raupen, des Nutzfahrzeugs übertragen werden (Antrieb, Traktion). Das Getriebe, insbesondere eine Hauptgetriebeeinheit, kann entlang der Fahrzeuglängsachse und/oder entlang der Fahrzeugmittelebene und/oder entgegen der Vorwärtsfahrrichtung hinter dem Antriebsmotor in Richtung des hinteren Endes des Fahrzeugs angeordnet sein, insbesondere kann die Hauptgetriebeeinheit direkt am Antriebsmotor angeordnet sein. Das Antriebselement, insbesondere die Eingangswelle, des Getriebes, insbesondere der Hauptgetriebeeinheit, kann mit der Kurbelwelle des Antriebsmotors verbunden und/oder antreibbar sein. Die Kurbelwellenachsen der Kurbelwelle des Antriebsmotors und das Antriebselement des Getriebes können koaxial zueinander ausgerichtet und/oder angeordnet sein. Alternativ können die Kurbelwellenachse und das Antriebselement zueinander parallel verschoben oder in einem Winkel zueinander angeordnet sein. Das erste Abtriebselement des Getriebes kann zum Antrieb der Bodeneingriffsmittel mit diesen direkt oder indirekt verbindbar oder verbunden sein. Dadurch kann ein Kraft- und/oder Drehmomentfluss vom Antriebsmotor über die Kurbelwelle und das Antriebselement zum ersten und/oder zweiten Abtriebselement und weiter an eine vordere und/oder hintere Antriebsachse und somit an die Bodeneingriffsmittel herstellbar sein. Die WO 2018/087199 A1 offenbart ein Mehrstufengetriebe mit fünf Planetenradsätzen und sieben Schaltelementen.

Nachteilig hierbei ist, dass bei diesen Nutzfahrzeugen mit der bekannten Antriebsstrangarchitektur das Getriebe zu viel Bauraum benötigt. Ein wesentlicher Nachteil sind hierbei die vielen Wellen und Zahnradsätze, die bekannte lastschaltbare Getriebe aufweisen. Dadurch beansprucht das Getriebe Bauraum, der beispielsweise für zusätzliche Bauteile und/oder eine Kabine des Nutzfahrzeugs genutzt werden könnte. Darüber hinaus weisen die bekannten Getriebe im Arbeitsbereich eine zu geringe Anzahl an Gängen und/oder einen zu kleinen Geschwindigkeitsbereich und/oder eine zu geringe Spreizung der Gänge auf. Im Speziellen fehlt eine ausreichende und optimale Anzahl an Übersetzungsverhältnissen im Arbeitsbereich der Geschwindigkeiten auf dem Feld. Die bekannten Getriebe mit vielen Schaltelementen, insbesondere Kupplungen und/oder Bremsen und/oder Schaltmuffen bzw. Synchronisatoren, sind ausserdem technisch und/oder konstruktiv aufwändig und verursachen hohe Herstellungskosten.

Der vorliegenden Erfindung liegt daher die Aufgabe zugrunde, ein Getriebe und ein Nutzfahrzeug vorzuschlagen, durch welche die vorgenannten Probleme überwunden werden. Insbesondere sollen ein Getriebe und ein Nutzfahrzeug vorgeschlagen werden, mit welchen eine Getriebevielfalt in einem Nutzfahrzeug erhöht wird und/oder welche technisch und/oder konstruktiv und/oder wirtschaftlich weniger aufwändig sind und/oder das Getriebe eine kompaktere Bauweise aufweist und/oder der Bauraum, bevorzugt im Nutzfahrzeug, besondere bevorzugt unterhalb einer Kabine und/oder zwischen Antriebsmotor und Hinterachsmodul, besser nutzbar ist und/oder die Leistung und/oder die Fahrtüchtigkeit des Getriebes und/oder Nutzfahrzeugs verbessert ist und/oder eine ausreichende Anzahl an Übersetzungsverhältnissen aufweist.

Diese Aufgabe wird durch ein Getriebe mit den Merkmalen des Anspruchs 1 und ein landwirtschaftliches oder industrielles Nutzfahrzeug mit den Merkmalen des Anspruchs 13 gelöst. Die abhängigen Ansprüche beziehen sich auf besonders vorteilhafte Ausführungsformen der Erfindung.

Die Erfindung ist im beigefügten Anspruchssatz beschrieben. Erfindungsgemäß wird ein Getriebe zum Übertragen eines von einem Antriebsmotor erzeugten Drehmoments auf mindestens eine vordere und/oder hintere Antriebsachse eines landwirtschaftlichen oder industriellen Nutzfahrzeugs vorgeschlagen. Das Getriebe umfasst ein Antriebselement, insbesondere die Eingangswelle, und ein erstes Abtriebselement, insbesondere eine erste Ausgangswelle, und eine Hauptgetriebeeinheit. Die Hauptgetriebeeinheit umfasst genau einen ersten Planetenradsatz mit einem ersten Sonnenrad, einem ersten Hohlrad, einem ersten Planetenträger, insbesondere einem ersten Steg, und einem ersten Planetensatz, und einen zweiten Planetenradsatz mit einem zweiten Sonnenrad, und einen dritten Planetenradsatz mit einem dritten Sonnenrad und einem dritten Planentensatz. Der zweite und dritte Planetenradsatz weisen einen ersten gemeinsamen Planetensatz und ein erstes gemeinsames Hohlrad und einen ersten gemeinsamen Planetenträger, bevorzugt einen ersten gemeinsamen Steg auf. Ausserdem umfasst die Hauptgetriebeeinheit genau sieben Schaltelemente. Die Schaltelemente der Hauptgetriebeeinheit sind eine erste Bremse und eine zweite Bremse und eine dritte Bremse und eine erste Kupplung und eine zweite Kupplung und eine dritte Kupplung und eine vierte Kupplung. Das Getriebe umfasst weiter ein Zwischengetriebe, das mindestens zwei Schaltelemente aufweist. Das Zwischengetriebe kann mindestens einen oder zwei Planetenradsätze umfassen. Mit dem Zwischengetriebe können mindestens zwei Vorwärtsgänge herstellbar sein. Das Getriebe umfasst weiter eine Reversiereinheit, wobei die Reversiereinheit genau zwei Schaltelemente umfasst. Die Reversiereinheit ist bevorzugt zur Änderung einer Drehrichtung des Getriebes, besonders bevorzugt zur Änderung einer Drehrichtung des ersten Abtriebselements, und insbesondere eines zweiten Abtriebselements ausgestaltet. Darüber hinaus können mit der Reversiereinheit insbesondere mindestens ein Vorwärtsgang und ein Rückwärtsgang herstellbar sein. Die Reversiereinheit kann mindestens einen Planetenradsatz oder mindestens zwei Radsätze mit je einem Los- und Festrad umfassen. Genau drei der Schaltelemente der Hauptgetriebeeinheit und mindestens ein Schaltelement des Zwischengetriebes und genau ein Schaltelement der Reversiereinheit sind in Kombinationen von mindestens fünf, insbesondere genau fünf oder sechs, Schaltelementen betätigbar, bevorzugt selektiv betätigbar, besonders bevorzugt schliessbar und lösbar und/oder einrückbar und/oder schaltbar und/oder selektiv eingreifbar, um mindestens achtzehn, insbesondere genau achtzehn oder sechsunddreissig, Vorwärtsgänge zwischen dem Antriebselement und dem ersten Abtriebselement und/oder dem zweiten Abtriebselement herzustellen. Darüber hinaus können zusätzlich mindestens achtzehn, bevorzugt genau achtzehn oder sechsunddreissig, Rückwärtsgänge herstellbar sein. Es kann aber auch nur ein Teil der achtzehn oder sechsunddreissig Rückwärtsgänge, also weniger als achtzehn oder sechsunddreissig Rückwärtsgänge, tatsächlich verwendet werden.

Das erste gemeinsame Hohlrad kann mit der Reversiereinheit oder dem Zwischengetriebe, insbesondere ständig, verbunden sein, bevorzugt drehfest und/oder antreibbar verbunden sein. Die Hauptgetriebeeinheit kann aber auch ein erstes Zwischenelement, beispielsweise eine erste Zwischenwelle umfassen. Im Speziellen kann das erste Zwischenelement mit dem ersten gemeinsamen Hohlrad und der Reversiereinheit oder dem Zwischengetriebe, insbesondere ständig, verbunden sein, bevorzugt drehfest und/oder antreibbar verbunden sein.

Ebenso kann die Hauptgetriebeeinheit zumindest teilweise oder aber vollständig das Antriebselement und/oder das erste Abtriebselement umfassen. Mit der Hauptgetriebeeinheit können mindestens neun Vorwärtsgänge zwischen dem Antriebselement und dem ersten gemeinsamen Hohlrad, bevorzugt zwischen dem Antriebselement und dem ersten Zwischenelement, herstellbar sein. Mit dem Zwischengetriebe können mindestens zwei Vorwärtsgänge herstellbar sein. Somit können mit der Hauptgetriebeeinheit und dem Zwischengetriebe insgesamt mindestens achtzehn Vorwärtsgänge herstellbar sein. Mit der Reversiereinheit können ein Vorwärts- und ein Rückwärtsgang herstellbar sein. Somit können mit der Hauptgetriebeeinheit und dem Zwischengetriebe und der Reversiereinheit insgesamt mindestens achtzehn Vorwärts- und achtzehn Rückwärtsgänge herstellbar sein.

Die Planetenradsätze der Hauptgetriebeeinheit können axial betrachtet in der Reihenfolge erster Planetenradsatz, zweiter Planetenradsatz und dritter Planetenradsatz angeordnet sein. Der erste Planetenradsatz kann als ein einfacher Minus-Planetensatz ausgebildet sein. Ein Minus Planetensatz umfasst bekanntlich ein Sonnenrad, ein Hohlrad und ein Planetenträger, an dem Planetenräder drehbar gelagert, die jeweils mit Sonnenrad und Hohlrad kämmen. Hierdurch weist das Hohlrad bei festgehaltenem Planetenträger eine zum Sonnenrad entgegengesetzte Drehrichtung auf. Der erste Planetensatz kann insbesondere einen Satz von ersten Planetenrädern aufweisen. Der erste Planetensatz kann drei erste Planetenräder umfassen. Der erste Planetensatz, also die ersten Planetenräder, können am ersten Planetenträger drehbar gelagert sein. Der erste Planetensatz kann mit dem ersten Sonnenrad und dem ersten Hohlrad kämmen, sich also insbesondere in ständigem Kämmeingriff mit diesen befinden. Der dritte Planetensatz kann einen Satz von dritten Planetenrädern, insbesondere drei dritte Planetenräder, und/oder der erste gemeinsame Planetensatz einen Satz von ersten gemeinsamen Planetenrädern, insbesondere drei erste gemeinsame Planetenräder, umfassen. Der dritte Planetensatz, also die dritten Planetenräder, und der erste gemeinsame Planetensatz, also die ersten gemeinsamen Planetenräder, können am ersten gemeinsamen Planetenträger drehbar gelagert sein. Ausserdem kann der dritte Planetensatz mit dem dritten Sonnenrad und den ersten gemeinsamen Planetenrädern kämmen, sich also insbesondere in ständigem Kämmeingriff mit diesen befinden. Darüber hinaus kann der erste gemeinsame Planetensatz mit dem zweiten Sonnenrad und dem ersten gemeinsamen Hohlrad und dem dritten Planetensatz kämmen, sich also insbesondere in ständigem Kämmeingriff mit diesen befinden. Mit anderen Worten, der zweite und dritte Planetenradsatz können als ein doppelter Planetenradsatz, insbesondere als Ravigneaux und/oder Lepelletier Planetenradsatz, ausgebildet sein. Dabei kann der doppelte Planetenradsatz das zweite und dritte Sonnenrad, den dritten Planetensatz und den ersten gemeinsame Planetensatz, den ersten gemeinsamen Planetenträger und das erste gemeinsame Hohlrad umfassen. Üblicherweise werden für die Planetensätze des Getriebes, also insbesondere den ersten und dritten Planetensatz und/oder den ersten gemeinsamen und/oder einen zweiten gemeinsamen Planetensatz und/oder einen vierten und/oder fünften und/oder sechsten Planetensatz, jeweils drei Planetenräder verwendet. Es wäre aber auch eine andere Anzahl an Planetenrädern denkbar, beispielsweise jeweils vier oder fünf oder sechs oder mehrere Planetenräder. Die Anzahl der Planeten hat dabei vorteilhafterweise einen Einfluss auf das maximal übertragbare Drehmoment.

Mit anderen Worten, es wird ein Getriebe als Mehrstufengetriebe in Planetenbauweise vorgeschlagen, umfassend das Antriebselement, das mit einem Antriebsmotor verbunden, bevorzugt antreibbar und/oder drehfest verbunden sein kann. Des Weiteren kann das Getriebe mindestens fünf, insbesondere sechs, Planetenradsätze, mindestens zwei drehbare Wellen, das Antriebs- und das erste Abtriebselement sowie mindestens elf, insbesondere genau elf oder vierzehn, Schaltelemente umfassen. Die Schaltelemente des Getriebes können als Reibschaltelemente und/oder Lamellenschaltelemente ausgeführt sein. Ebenso können die Schaltelemente als formschlüssige Schaltelemente ausgeführte Schaltelemente sein. Die Schaltelemente können Bremsen und/oder Kupplungen sein. Das Betätigen, insbesondere das selektive Betätigen oder Eingreifen, der mindestens fünf, insbesondere genau fünf oder sechs, Schaltelemente des Getriebes kann verschiedene Übersetzungsverhältnisse zwischen dem Antriebselement und dem ersten Abtriebselement und/oder dem zweiten Abtriebselement bewirken, so dass vorzugsweise mindestens achtzehn, insbesondere genau (achtzehn oder sechsunddreissig, Vorwärtsgänge und insbesondere genauso viele oder weniger Rückwärtsgänge herstellbar sind.

Das erste Abtriebselement kann zum Antrieb der hinteren und/oder vorderen Bodeneingriffsmittel des Nutzfahrzeugs vorgesehen sein und/oder mit einem Hinterachsmodul verbindbar sein. Dadurch kann ein Kraft- und/oder Drehmomentfluss zwischen dem ersten Abtriebselement und der hinteren und/oder vorderen Antriebsachse herstellbar sein, sodass beispielsweise eine Kraft und/oder ein Drehmoment an die hintere und/oder vordere Antriebsachse des Nutzfahrzeugs übertragen werden kann. Das Getriebe, insbesondere die Hauptgetriebeeinheit, kann das zweites Abtriebselement, insbesondere eine zweite Ausgangswelle umfassen. Das zweite Abtriebselement kann zum Antrieb der vorderen Bodeneingriffsmittel des Nutzfahrzeugs vorgesehen sein und/oder mit einem Vorderachsmodul antreibbar verbindbar oder verbunden sein. Dadurch kann ein Kraft- und/oder Drehmomentfluss zwischen dem zweiten Abtriebselement und der vorderen Antriebsachse herstellbar sein, sodass beispielsweise eine Kraft und/oder ein Drehmoment an die vordere Antriebsachse des Nutzfahrzeugs übertragen werden kann, und insbesondere kann gleichzeitig ein Kraft- und/oder Drehmomentfluss zwischen dem ersten Antriebselement und der hinteren Antriebsachse herstellbar sein. Das erste und zweite Abtriebselement können also antreibbar verbunden oder verbindbar sein. Vorteilhafterweise kann so ein Kraft- und/oder Drehmomentfluss, insbesondere ein getrennter Kraft- und/oder Drehmomentfluss, vom ersten Abtriebselement zur hinteren Antriebsachse und vom zweiten Abtriebselement zur vorderen Antriebsachse herstellbar sein.

Das Getriebe kann ein Hinterachsmodul aufweisen. Das Hinterachsmodul kann mindestens teilweise oder ganz die hintere Antriebsachse und/oder ein Hinterachsdifferential umfassen. Das Hinterachsmodul, insbesondere das Hinterachsdifferential, kann ein Hinterachsritzel, beispielsweise ein Antriebskegelrad oder ein Kegelritzel, und ein Hinterachszahnrad, beispielsweise ein Kegel- oder Ringzahnrad, umfassen. Das Hinterachsgehäuse kann das Hinterachsmodul, insbesondere das Hinterachsdifferential und/oder zumindest teilweise die hintere Antriebsachse aufnehmen. Das erste Abtriebselement kann mit dem Hinterachsritzel verbunden sein oder das Hinterachsritzel und das erste Abtriebselement können als ein einteiliges Bauteil ausgebildet sein. Das Getriebe kann ein Vorderachsmodul aufweisen. Das Vorderachsmodul kann teilweise oder ganz die vordere Antriebsachse und/oder ein Vorderachsdifferential umfassen. Das Vorderachsmodul, insbesondere das Vorderachsdifferential, kann ein Vorderachsritzel, beispielsweise ein Antriebskegelrad oder ein Kegelritzel, und ein Vorderachszahnrad, beispielsweise ein Kegel- oder Ringzahnrad, umfassen. Ein Vorderachsgehäuse kann das Vorderachsmodul, insbesondere das Vorderachsdifferential und/oder zumindest teilweise die vordere Antriebsachse aufnehmen. Das zweite Abtriebselement kann mit dem Vorderachsritzel verbunden sein oder das Vorderachsritzel und das zweite Abtriebselement können als ein einteiliges Bauteil ausgebildet sein.

Das Getriebe kann ein die Hauptgetriebeeinheit aufnehmendes Hauptgetriebegehäuse und/oder ein die Reversiereinheit aufnehmendes Reversiereinheitsgehäuse und/oder ein das Zwischengetriebe aufnehmendes Zwischengetriebegehäuse und/oder ein Hinterachsmodul aufnehmendes Hinterachsgehäuse und/oder ein Vorderachsmodul aufnehmendes Vorderachsgehäuse umfassen. Das Hauptgetriebegehäuse und/oder das Reversiereinheitsgehäuse und/oder das Zwischengetriebegehäuse und/oder das Hinterachsgehäuse und/oder das Vorderachsgehäuse können vorteilhafterweise, unabhängig von der Anzahl der Planetenradsätze und/oder Wellen, einen vorgebbaren und/oder festen Bauraum, also eine vorgebbare axiale und laterale Ausdehnung, aufweisen. Insbesondere in einem im Nutzfahrzeug verbauten Zustand weisen die Gehäuse dadurch im Nutzfahrzeug stets den gleichen Bauraum und/oder somit eine Modularität bzgl. des Bauraums auf. Das Hauptgetriebegehäuse und/oder das Reversiereinheitsgehäuse und/oder das Zwischengetriebegehäuse und/oder das Hinterachsgehäuse und/oder das Vorderachsgehäuse können ein- oder mehrteilig ausgebildet sein. Das Hauptgetriebegehäuse und/oder das Reversiereinheitsgehäuse und/oder das Zwischengetriebegehäuse und/oder das Hinterachsgehäuse und/oder das Vorderachsgehäuse können Bauteile des Getriebes in sich aufnehmen.

Das Getriebe kann ausserdem ein Koppelelement umfassen. Das Koppelelement kann am Antriebselement angeordnet sein. In einem im Nutzfahrzeug eingebauten Zustand können der Antriebsmotor, insbesondere die Kurbelwelle oder eine Antriebswelle des Antriebsmotors, und das Koppelelement oder das Antriebselement drehfest und/oder antreibbar verbindbar oder verbunden sein, beispielsweise über eine Welle-Nabe-Verbindung. Dadurch kann vorteilhafterweise zwischen der Hauptgetriebeeinheit und/oder der Reversiereinheit und/oder der Zwischengetriebe und/oder dem Hinterachsmodul und/oder dem Vorderachsmodul ein Drehmomentfluss herstellbar sein, insbesondere können das Antriebselement und somit das erste und/oder zweite Abtriebselement mit dem Antriebsmotor antreibbar sein.

In einem Zustand, in welchem das Getriebe in einem Nutzfahrzeug eingebaut ist, kann eine Getriebelängsachse, also eine Längsachse des Getriebes, die eine in eine Längsrichtung des Getriebes verlaufende Achse ist, parallel oder koaxial zu der Fahrzeuglängsachse angeordnet sein. Die Planetenradsätze können axial oder entlang der Getriebelängsachse angeordnet sein.

Wesentlich für die Erfindung ist, dass das Getriebe ausreichend Übersetzungen aufweist und/oder der Bauaufwand und die Baugröße, insbesondere der Bauraum, bzw. das Gewicht vorteilhafterweise optimiert sind und zudem der Wirkungsgrad hinsichtlich der Schlepp- und Verzahnungsverluste verbessert. In vorteilhafter Weise liegen geringe Drehmomente in den Schaltelementen und in den Planetenradsätzen des Getriebes vor, wodurch der Verschleiß des Getriebes in vorteilhafter Weise reduziert wird. Ebenso wird vorteilhafterweise durch die Ausgestaltung des Getriebes und/oder durch die geringen Momente eine konstruktiv einfache Ausgestaltung, insbesondere eine kompakte Bauweise, also ein geringes Volumen des Getriebes und/oder eine geringe Dimensionierung erreicht, sodass der vom Getriebe benötigte Bauraum und die entsprechenden Kosten reduziert werden. Darüber hinaus liegen auch geringe Drehzahlen bei den Wellen, den Schaltelementen und den Planetenradsätzen vor. Außerdem ist das Getriebe derart konzipiert, dass eine Anpassbarkeit an unterschiedliche Antriebstrangarchitekturen sowohl in Richtung des Kraft- und/oder Drehmomentflusses, als auch in räumlicher Hinsicht ermöglicht wird. Das Getriebe kann beispielsweise in Front-Quer Bauweise oder im Rahmen eines Standardantriebs in das Nutzfahrzeug eingebaut werden. Aufgrund der räumlichen Anordnung der drei Planetensätze kann in einem im Nutzfahrzeug eingebauten Zustand des Getriebes von Vorteil der Bauraum, insbesondere der Axial- und Radialraum, des Getriebes im Nutzfahrzeug minimiert werden. Darüber hinaus weist das Getriebe vorteilhafterweise eine geringen bzw. minimale Anzahl an Zahnrädern und Schaltelementen auf, wodurch das Getriebe, insbesondere auch in einem im Nutzfahrzeug eingebauten Zustand, vorteilhafterweise eine kompaktere und konstruktiv einfachere Bauweise aufweist und der Bauaufwand erheblich reduziert ist. In vorteilhafter Weise ergibt sich bei dem Getriebe ein guter Wirkungsgrad in den Vorwärts- und/oder Rückwärtsgängen bezüglich der Schlepp- und Verzahnungsverluste. In vorteilhafterweise Weise sind also das Getriebe und das Nutzfahrzeug insgesamt technisch und konstruktiv und wirtschaftlich weniger aufwändig. Ebenso wird zusätzlicher Bauraum für Bauteile außerhalb des Getriebes ermöglicht. Darüber hinaus kann die Kabine tiefer, also in Richtung einer Aufstandsfläche des Nutzfahrzeugs verschoben angeordnet sein, als Kabinen in bekannten Nutzfahrzeugen. Durch die erfindungsgemäße Ausgestaltung des Getriebes ergeben sich für Nutzfahrzeuge geeignete Übersetzungen sowie eine erhöhte Gesamtspreizung des Mehrstufengetriebes, wodurch eine Verbesserung des Fahrkomforts und eine signifikante Verbrauchsabsenkung bewirkt werden. Dadurch kann also vorteilhafterweise die Leistung und/oder die Fahrtüchtigkeit und/oder Strassenlage des Nutzfahrzeugs verbessert werden.

In Ausgestaltung der Erfindung ist das Zwischengetriebe in Richtung des Kraft- und Drehmomentflusses nach der Hauptgetriebeeinheit angeordnet. Das Zwischengetriebe kann in Richtung des Kraft- und Drehmomentflusses nach der Hauptgetriebeeinheit und vor der Reversiereinheit angeordnet sein oder die Reversiereinheit kann in Richtung des Kraft- und Drehmomentflusses nach der Hauptgetriebeeinheit und vor dem Zwischengetriebe angeordnet sein. Die Hauptgetriebeeinheit und/oder das Zwischengetriebe und/oder die Reversiereinheit können entlang der Getriebelängsachse und/oder der Fahrzeuglängsachse angeordnet sein. Ebenso kann das Zwischengetriebe auch vor der Hauptgetriebeeinheit angeordnet sein. Vorteilhafterweise wird dadurch eine kompakte axiale Bauweise erreicht.

Das Antriebselement ist mit dem ersten Hohlrad und der ersten Kupplung verbunden, bevorzugt drehfest und/oder antreibbar verbunden oder verbindbar sein. Das Getriebe, insbesondere die Hauptgetriebeeinheit, kann ein erstes Verbindungselement, insbesondere eine erste Verbindungswelle umfassen. Das erste Verbindungselement kann mit dem Antriebselement und dem ersten Hohlrad und/oder der ersten Kupplung verbunden oder verbindbar sein, bevorzugt drehfest und/oder antreibbar verbunden oder verbindbar sein. Der erste Planetenträger kann mit der ersten Kupplung und/oder der zweiten Kupplung und/oder der dritten Kupplung verbunden oder verbindbar sein, bevorzugt drehfest und/oder antreibbar verbunden oder verbindbar sein. Ebenso kann das Getriebe, insbesondere die Hauptgetriebeeinheit, ein zweites Verbindungselement, insbesondere eine zweite Verbindungswelle umfassen. Das zweite Verbindungselement kann mit dem ersten Planetenträger und/oder der ersten Kupplung und/oder der zweiten Kupplung und/oder der dritten Kupplung verbunden oder verbindbar sein, bevorzugt drehfest und/oder antreibbar verbunden oder verbindbar sein. Darüber hinaus kann das zweite Sonnenrad mit der zweiten Bremse und/oder der dritten Kupplung verbunden oder verbindbar sein, insbesondere drehfest und/oder antreibbar verbunden oder verbindbar sein. Das Getriebe, insbesondere die Hauptgetriebeeinheit, kann ein drittes Verbindungselement, insbesondere eine dritte Verbindungswelle umfassen. Das dritte Verbindungselement kann mit dem zweiten Sonnenrad und/oder der zweiten Bremse und/oder der dritten Kupplung verbunden oder verbindbar sein, bevorzugt drehfest und/oder antreibbar verbunden oder verbindbar sein. Ebenso kann das dritte Sonnenrad mit der zweiten Kupplung verbunden oder verbindbar sein, insbesondere drehfest und/oder antreibbar verbunden oder verbindbar sein. Das Getriebe, insbesondere die Hauptgetriebeeinheit, kann ein viertes Verbindungselement, insbesondere eine vierte Verbindungswelle umfassen. Das vierte Verbindungselement kann mit dem dritten Sonnenrad und/oder der zweiten Kupplung verbunden oder verbindbar sein, bevorzugt drehfest und/oder antreibbar verbunden oder verbindbar sein. Ebenso kann der erste gemeinsame Planetenträger mit der dritten Bremse verbunden oder verbindbar sein, insbesondere drehfest und/oder antreibbar verbunden oder verbindbar sein. Das Getriebe, insbesondere die Hauptgetriebeeinheit, kann ein fünftes Verbindungselement, insbesondere eine fünfte Verbindungswelle umfassen. Das fünfte Verbindungselement kann mit der dritten Bremse und/oder dem ersten gemeinsamen Planetenträger verbunden oder verbindbar sein, bevorzugt drehfest und/oder antreibbar verbunden oder verbindbar sein. Im Speziellen kann das erste Zwischenelement mit dem ersten gemeinsamen Hohlrad verbunden sein, bevorzugt drehfest und/oder antreibbar verbunden sein. Das Antriebselement ist mit der vierten Kupplung verbunden, bevorzugt drehfest und/oder antreibbar verbunden sein. Das Getriebe, insbesondere die Hauptgetriebeeinheit, kann ein sechstes Verbindungselement, insbesondere eine sechste Verbindungswelle umfassen. Das sechste Verbindungselement kann mit dem Antriebselement und der vierten Kupplung verbunden sein, bevorzugt drehfest und/oder antreibbar verbunden sein. Die vierte Kupplung kann mit dem ersten gemeinsamen Planetenträger verbindbar sein, bevorzugt drehfest und/oder antreibbar verbindbar sein. Das Getriebe, insbesondere die Hauptgetriebeeinheit, kann ein siebtes Verbindungselement, insbesondere eine siebte Verbindungswelle umfassen. Das siebte Verbindungselement kann mit dem ersten gemeinsamen Planetenträger und der vierten Kupplung verbunden oder verbindbar sein, bevorzugt drehfest und/oder antreibbar verbunden oder verbindbar sein. Das erste Sonnenrad kann mit der ersten Bremse gegen Drehung haltbar sein, bevorzugt lösbar gegen Drehung haltbar sein. Das erste Sonnenrad kann mit der ersten Bremse an das Hauptgetriebegehäuse koppelbar und/oder lösbar mit dem Hauptgetriebegehäuse verbindbar sein, bevorzugt lösbar gegen Drehung haltbar sein. Das Antriebselement, und insbesondere das erste Verbindungselement, kann mit der ersten oder über die erste Kupplung mit dem ersten Planetenträger und/oder der zweiten Kupplung und/oder insbesondere dem zweiten Verbindungselement und/oder der dritten Kupplung lösbar verbindbar oder verbunden sein, insbesondere lösbar drehfest und/oder antreibbar verbindbar oder verbunden sein. Die erste Kupplung kann also ausgebildet sein, das Antriebselement, und insbesondere das erste Verbindungselement, mit dem ersten Planetenträger und/oder dem dritten Sonnenrad und/oder der zweiten Kupplung und/oder insbesondere dem zweiten Verbindungselement und/oder der dritten Kupplung zu koppeln. Der erste Planetenträger, und insbesondere das zweite Verbindungselement, kann mit der zweiten oder über die zweite Kupplung mit dem dritten Sonnenrad und/oder insbesondere dem vierten Verbindungselement lösbar verbindbar oder verbunden sein, insbesondere lösbar drehfest und/oder antreibbar verbindbar oder verbunden sein. Die zweite Kupplung kann also ausgebildet sein, den ersten Planetenträger, und insbesondere das zweite Verbindungselement, mit dem dritten Sonnenrad und/oder insbesondere dem vierten Verbindungselement zu koppeln. Der erste Planetenträger, und insbesondere das zweite Verbindungselement, kann mit der dritten oder über die dritte Kupplung mit dem zweiten Sonnenrad und/oder der zweiten Bremse und/oder insbesondere dem dritten Verbindungselement lösbar verbindbar oder verbunden sein, insbesondere lösbar drehfest und/oder antreibbar verbindbar oder verbunden sein. Die dritte Kupplung kann also ausgebildet sein, den ersten Planetenträger, und insbesondere das zweite Verbindungselement, mit dem zweiten Sonnenrad und/oder der zweiten Bremse und/oder insbesondere dem dritten Verbindungselement zu koppeln. Das zweite Sonnenrad, und insbesondere das dritte Verbindungselement, kann mit der zweiten Bremse gegen Drehung haltbar sein, bevorzugt lösbar gegen Drehung haltbar sein. Das zweite Sonnenrad kann mit der zweiten Bremse an ein Hauptgetriebegehäuse koppelbar und/oder mit dem Hauptgetriebegehäuse lösbar verbindbar sein, bevorzugt lösbar gegen Drehung haltbar sein. Die zweite Bremse kann also ausgebildet sein, das zweite Sonnenrad, und insbesondere das dritte Verbindungselement, gegen Drehung zu halten. Der erste gemeinsame Planetenträger und/oder der erste gemeinsame Planetensatz und/oder der dritte Planetensatz, und insbesondere das fünfte Verbindungselement, können mit der dritten Bremse gegen Drehung haltbar, bevorzugt lösbar gegen Drehung haltbar. Der erste gemeinsame Planetenträger und/oder der erste gemeinsame Planetensatz und/oder der dritte Planetensatz, und insbesondere das fünfte Verbindungselement, können mit der dritten Bremse an das Hauptgetriebegehäuse koppelbar und/oder mit dem Hauptgetriebegehäuse lösbar verbindbar sein, bevorzugt lösbar gegen Drehung haltbar sein. Das Antriebselement, und insbesondere das sechste Verbindungselement, ist mit der vierten oder über die vierte Kupplung mit dem ersten gemeinsamen Planetenträger und/oder insbesondere dem siebten Verbindungselement lösbar verbunden, insbesondere lösbar drehfest und/oder antreibbar verbindbar oder verbunden sein. Die vierte Kupplung kann also ausgebildet sein, das Antriebselement, und insbesondere das sechste Verbindungselement, mit dem ersten gemeinsamen Planetenträger und/oder insbesondere dem siebten Verbindungselement zu koppeln. In Ausgestaltung der Erfindung umfasst die Reversiereinheit einen vierten Planetenradsatz mit einem vierten Sonnenrad, einem vierten Hohlrad, einem vierten Planetenträger und einem vierten Planetensatz. Die Schaltelemente der Reversiereinheit sind eine fünfte Kupplung und eine vierte Bremse. Die Reversiereinheit kann parallel oder koaxial zum Antriebselement und/oder dem ersten Abtriebselement angeordnet sein. Der vierte Planetensatz kann einen Satz von vierten Planetenrädern aufweisen, insbesondere drei vierte Planetenräder. Die vierten Planetenräder können am vierten Planetenträger drehbar gelagert sein. Der vierte Planetensatz, also insbesondere der Satz von vierten Planetenrädern, kann mit dem vierten Sonnenrad und dem vierten Hohlrad kämmen, sich also insbesondere in ständigem Kämmeingriff mit diesen befinden. Die Reversiereinheit kann mindestens zwei, insbesondere genau zwei, Schaltelemente umfassen, die betätigbar sind, bevorzugt selektiv betätigbar, besonders bevorzugt schliessbar und lösbar und/oder einrückbar und/oder schaltbar und/oder selektiv eingreifbar sind, um das erste gemeinsame Hohlrad, und insbesondere das erste Zwischenelement, mit dem vierten Sonnenrad zu verbinden oder um das vierte Hohlrad gegen Drehung zu halten. Das erste gemeinsame Hohlrad, und insbesondere das erste Zwischenelement, kann mit dem vierten Planetenträger und/oder der fünften Kupplung verbunden oder verbindbar sein, bevorzugt drehfest und/oder antreibbar verbunden oder verbindbar sein. Das vierte Sonnenrad kann mit einem fünften Sonnenrad und/oder der fünften Kupplung und/oder einer sechsten Kupplung verbunden oder verbindbar sein, bevorzugt drehfest und/oder antreibbar verbunden oder verbindbar sein. Das Getriebe, insbesondere die Reversiereinheit, kann ein achtes Verbindungselement, insbesondere eine achte Verbindungswelle umfassen. Das achte Verbindungselement kann mit dem vierten Sonnenrad und einem fünften Sonnenrad und/oder der fünften Kupplung und/oder einer sechsten fünften Kupplung verbunden oder verbindbar sein, bevorzugt drehfest und/oder antreibbar verbunden oder verbindbar sein. Der vierte Planetenträger und das erste gemeinsame Hohlrad, und insbesondere das erste Zwischenelement, können mit der fünften oder über die fünfte Kupplung mit dem vierten Sonnenrad und/oder insbesondere dem achten Verbindungselement lösbar verbindbar sein, insbesondere lösbar drehfest und/oder antreibbar verbindbar sein. Die fünfte Kupplung kann also ausgebildet sein, den vierten Planetenträger und das erste gemeinsame Hohlrad, und insbesondere das erste Zwischenelement, mit dem vierten Sonnenrad und/oder insbesondere dem achten Verbindungselement zu koppeln. Das vierte Hohlrad kann mit der vierten Bremse gegen Drehung haltbar, bevorzugt lösbar gegen Drehung haltbar sein. Das vierte Hohlrad kann mit der vierten Bremse an ein Gehäuse der Reversiereinheit, also einem Reversiereinheitsgehäuse, koppelbar und/oder mit diesem lösbar verbindbar sein, bevorzugt lösbar gegen Drehung haltbar sein. Die vierte Bremse kann also ausgebildet sein, das vierte Hohlrad gegen Drehung zu halten. Aufgrund der Kombination der Hauptgetriebeeinheit mit der Reversiereinheit werden vorteilhafterweise, die oben genannten erfindungsgemässen Vorteile erreicht. Darüber hinaus weist die Reversiereinheit aufgrund der beschriebenen Planetenbauweise vorteilhafterweise eine geringe axiale Baulänge auf. Dies wirkt sich insbesondere auf die axiale Baulänge des Getriebes und/oder den Bauraum des Getriebes, insbesondere in einem Zustand, in welchem das Getriebe in das Nutzfahrzeug eingebaut ist, insgesamt vorteilhaft aus.

Als vorteilhafte Massnahme umfasst das Getriebe ein Zwischengetriebe. Das Zwischengetriebe weist einen fünften Planetenradsatz mit einem fünften Sonnenrad, einem fünften Hohlrad, einem fünften Planetenträger, insbesondere einem fünften Steg, und einem fünften Planetensatz auf. Das Zwischengetriebe kann mindestens zwei, insbesondere genau zwei, Schaltelemente umfassen. Die Schaltelemente des Zwischengetriebes sind sechste Kupplung und eine siebte Kupplung. Das Getriebe, insbesondere das Zwischengetriebe, kann ein zweites Zwischenelement teilweise oder auch vollständig umfassen. Der fünfte Planetensatz kann einen Satz von fünften Planetenrädern aufweisen, insbesondere drei fünfte Planetenräder. Die fünften Planetenräder können am fünften Planetenträger drehbar gelagert sein. Der fünfte Planetensatz, also insbesondere der Satz von fünften Planetenrädern, kann mit dem fünften Sonnenrad und dem fünften Hohlrad kämmen, sich also insbesondere in ständigem Kämmeingriff mit diesen befinden. Darüber hinaus kann das Zwischengetriebe parallel oder koaxial zum Antriebselement und/oder dem ersten Abtriebselement angeordnet sein. Im Speziellen kann das Zwischengetriebe das erste Abtriebselement zumindest teilweise oder vollständig umfassen. Die zwei Schaltelemente des Zwischengetriebes sind betätigbar, bevorzugt selektiv betätigbar, besonders bevorzugt schliessbar und lösbar und/oder einrückbar und/oder schaltbar und/oder selektiv eingreifbar sind, um das fünfte Sonnenrad oder den fünften Planetensatz und/oder den fünften Planetenträger mit dem zweiten Zwischenelement und/oder insbesondere dem ersten Abtriebselement zu verbinden und/oder zu koppeln, insbesondere lösbar drehfest und/oder antreibbar zu verbinden. Das fünfte Sonnenrad kann mit dem vierten Sonnenrad und/oder der fünften Kupplung und/oder der sechsten Kupplung verbunden oder verbindbar sein, bevorzugt drehfest und/oder antreibbar verbunden oder verbindbar sein. Das achte Verbindungselement kann dem vierten und fünften Sonnenrad und/oder der fünften Kupplung und/oder der sechsten Kupplung verbunden oder verbindbar sein, bevorzugt drehfest und/oder antreibbar verbunden oder verbindbar sein. Im Speziellen können die Reversiereinheit und/oder das Zwischengetriebe das achte Verbindungselement umfassen. Das fünfte Sonnenrad und das vierte Sonnenrad, und insbesondere das achte Verbindungselement, können mit der sechsten oder über die sechste Kupplung mit dem zweiten Zwischenelement und/oder insbesondere dem ersten Abtriebselement lösbar verbindbar sein, insbesondere lösbar drehfest und/oder antreibbar verbindbar sein. Die sechste Kupplung kann also ausgebildet sein, das fünfte Sonnenrad und das vierte Sonnenrad, und insbesondere das achte Verbindungselement, mit dem zweiten Zwischenelement und/oder insbesondere dem ersten Abtriebselement zu koppeln. Ausserdem kann der fünfte Planetenträger mit der siebten Kupplung verbunden oder verbindbar sein, insbesondere drehfest und/oder antreibbar verbunden oder verbindbar sein. Das Getriebe, insbesondere das Zwischengetriebe, kann neuntes Verbindungselement, insbesondere eine neunte Verbindungswelle umfassen. Das neunte Verbindungselement kann mit der siebten Kupplung und/oder dem fünften Planetenträger verbunden oder verbindbar sein, bevorzugt drehfest verbunden oder verbindbar sein. Der fünfte Planetenträger und/oder der fünfte Planetensatz, und insbesondere das neunte Verbindungselement, können mit der siebten oder über die siebte Kupplung mit dem zweiten Zwischenelement und/oder insbesondere dem ersten Abtriebselement lösbar verbindbar sein, insbesondere lösbar drehfest und/oder antreibbar verbindbar sein. Die siebte Kupplung kann also ausgebildet sein, den fünften Planetenträger, und insbesondere das neunte Verbindungselement, mit dem zweiten Zwischenelement und/oder insbesondere dem ersten Abtriebselement zu koppeln. Das fünfte Hohlrad kann gegen Drehung gehalten sein. Das fünfte Hohlrad kann an ein Gehäuse des Zwischengetriebes, also einem Zwischengetriebegehäuse, gekoppelt und/oder mit diesem verbunden sein, bevorzugt gegen Drehung gehalten sein. Aufgrund der Kombination der Hauptgetriebeeinheit mit dem Zwischengetriebe werden vorteilhafterweise, die oben genannten erfindungsgemässen Vorteile erreicht. Darüber hinaus weist das Zwischengetriebe aufgrund der beschriebenen Planetenbauweise vorteilhafterweise eine geringe axiale Baulänge auf. Dies wirkt sich insbesondere auf die axiale Baulänge des Getriebes und/oder den Bauraum des Getriebes, insbesondere in einem Zustand, in welchem das Getriebe in das Nutzfahrzeug eingebaut ist, insgesamt vorteilhaft aus.

In Ausgestaltung der Erfindung umfasst das Zwischengetriebe einen vierten Planetenradsatz mit einem vierten Sonnenrad und einen fünften Planetenradsatz mit einem fünften Sonnenrad und einem fünften Planentensatz. Der vierte und fünfte Planetenradsatz weisen einen zweiten gemeinsamen Planetensatz und ein zweites gemeinsames Hohlrad und einen zweiten gemeinsamen Planetenträger auf. Der fünfte Planetensatz kann einen Satz von fünften Planetenrädern, insbesondere drei fünfte Planetenräder, und/oder der zweite gemeinsame Planetensatz einen Satz von zweiten gemeinsamen Planetenrädern, insbesondere drei zweite gemeinsame Planetenräder, umfassen. Der fünfte Planetensatz, also die fünften Planetenräder, und der zweite gemeinsame Planetensatz, also die zweiten gemeinsamen Planetenräder, können am zweiten gemeinsamen Planetenträger drehbar gelagert sein. Ausserdem kann der fünfte Planetensatz mit dem fünften Sonnenrad und den zweite gemeinsamen Planetenrädern kämmen, sich also insbesondere in ständigem Kämmeingriff mit diesen befinden. Darüber hinaus kann der zweite gemeinsame Planetensatz mit dem vierten Sonnenrad und dem zweiten gemeinsamen Hohlrad und dem fünften Planetensatz kämmen, sich also insbesondere in ständigem Kämmeingriff mit diesen befinden. Mit anderen Worten, der vierte und fünfte Planetenradsatz können als ein doppelter Planetenradsatz, insbesondere als Ravigneaux und/oder Lepelletier Planetenradsatz, ausgebildet sein. Dabei kann der doppelte Planetenradsatz das vierte und fünfte Sonnenrad, den fünften Planetensatz und den zweiten gemeinsame Planetensatz, den zweiten gemeinsamen Planetenträger und das zweite gemeinsame Hohlrad umfassen. Das Zwischengetriebe umfasst mindestens, insbesondere genau, fünf Schaltelemente. Mindestens oder genau drei Schaltelemente der Hauptgetriebeeinheit und mindestens oder genau zwei Schaltelemente des Zwischengetriebes und mindestens oder genau ein Schaltelement der Reversiereinheit sind in Kombinationen von mindestens sechs Schaltelementen, insbesondere genau sechs Schaltelementen, betätigbar, bevorzugt selektiv betätigbar, besonders bevorzugt schliessbar und lösbar und/oder einrückbar und/oder schaltbar und/oder selektiv eingreifbar, um mindestens sechsunddreissig Vorwärtsgänge, bevorzugt genau sechsunddreissig Vorwärtsgänge, und insbesondere mindestens oder genau sechsunddreissig Rückwärtsgänge, zwischen dem Antriebselement und dem ersten Abtriebselement herzustellen. Mit anderen Worten, das Betätigen, insbesondere das selektive Eingreifen, der mindestens drei Schaltelemente der Hauptgetriebeeinheit und der mindestens zwei Schaltelemente des Zwischengetriebes und des mindestens einen Schaltelements der Reversiereinheit kann verschiedene Übersetzungsverhältnisse zwischen dem Antriebselement und dem ersten Abtriebselement bewirken, sodass mindestens oder genau sechsunddreissig Vorwärtsgänge und insbesondere mindestens oder genau sechsunddreissig Rückwärtsgänge zwischen dem Antriebselement und dem ersten Abtriebselement herstellbar sind. Es kann aber auch nur ein Teil der sechsunddreissig Rückwärtsgänge, also weniger als sechsunddreissig Rückwärtsgänge, tatsächlich verwendet werden. Darüber hinaus kann das Zwischengetriebe parallel oder koaxial zum Antriebselement und/oder dem ersten Abtriebselement angeordnet sein. Aufgrund der Kombination der Hauptgetriebeeinheit mit dem Zwischengetriebe werden vorteilhafterweise, die oben genannten erfindungsgemässen Vorteile erreicht. Darüber hinaus ergeben sich insbesondere Nutzfahrzeuge geeignete Übersetzungen sowie eine erhöhte Gesamtspreizung des Getriebes, wodurch eine Verbesserung des Fahrkomforts und/oder eine signifikante Verbrauchsabsenkung bewirkt werden.

In Ausgestaltung der Erfindung sind die fünf Schaltelemente des Zwischengetriebes eine fünfte Kupplung und eine sechste Kupplung und eine siebte Kupplung und eine vierte und fünfte Bremse. Das erste gemeinsame Hohlrad, und insbesondere das erste Zwischenelement, kann mit der fünften Kupplung und der sechsten Kupplung und der siebten Kupplung verbunden sein, bevorzugt drehfest und/oder antreibbar verbunden sein. Das vierte Sonnenrad kann mit der vierten Bremse und/oder der sechsten Kupplung verbunden oder verbindbar sein, bevorzugt drehfest verbunden oder verbindbar sein. Ebenso kann das Getriebe, insbesondere das Zwischengetriebe, ein achtes Verbindungselement, insbesondere eine achte Verbindungswelle umfassen. Das achte Verbindungselement kann mit dem vierten Sonnenrad und/oder der sechsten Kupplung und/oder vierten Bremse verbunden oder verbindbar sein, bevorzugt drehfest und/oder antreibbar verbunden oder verbindbar sein. Darüber hinaus kann das fünfte Sonnenrad mit der fünften Kupplung verbunden oder verbindbar sein, insbesondere drehfest und/oder antreibbar verbunden oder verbindbar sein. Das Getriebe, insbesondere das Zwischengetriebe, kann ein neuntes Verbindungselement, insbesondere eine neunte Verbindungswelle umfassen. Das neunte Verbindungselement kann mit dem fünften Sonnenrad und/oder der fünften Kupplung verbunden oder verbindbar sein, bevorzugt drehfest und/oder antreibbar verbunden oder verbindbar sein. Ebenso kann der zweite gemeinsame Planetenträger mit der fünften Bremse verbunden oder verbindbar sein, insbesondere drehfest verbunden oder verbindbar sein. Das Getriebe, insbesondere das Zwischengetriebe, kann ein zehntes Verbindungselement, insbesondere eine zehnte Verbindungswelle umfassen. Das zehnte Verbindungselement kann mit der fünften Bremse und/oder dem zweiten gemeinsamen Planetenträger verbunden oder verbindbar sein, bevorzugt drehfest verbunden oder verbindbar sein. Das zweite gemeinsame Hohlrad kann mit einem dritten Zwischenelement, insbesondere einer dritten Zwischenwelle verbunden sein, bevorzugt drehfest und/oder antreibbar verbunden sein. Darüber hinaus kann der zweite gemeinsame Planetenträger mit der siebten Kupplung verbunden oder verbindbar sein, insbesondere drehfest und/oder antreibbar verbunden oder verbindbar sein. Das Getriebe, insbesondere das Zwischengetriebe, kann ein elftes Verbindungselement, insbesondere eine elfte Verbindungswelle umfassen. Das elfte Verbindungselement kann mit der siebten Kupplung und/oder dem zweiten gemeinsamen Planetenträger verbunden oder verbindbar sein, bevorzugt drehfest und/oder antreibbar verbunden oder verbindbar sein. Das vierte Sonnenrad, und insbesondere das achte Verbindungselement, kann mit der vierten Bremse gegen Drehung haltbar sein, bevorzugt lösbar gegen Drehung haltbar sein. Das vierte Sonnenrad, und insbesondere das achte Verbindungselement, kann mit der vierten Bremse an das Zwischengetriebegehäuse koppelbar und/oder lösbar mit dem Zwischengetriebegehäuse verbindbar sein, bevorzugt lösbar gegen Drehung haltbar sein. Das erste gemeinsame Hohlrad, und insbesondere das erste Zwischenelement, kann mit der fünften oder über die fünfte Kupplung mit dem fünften Sonnenrad und/oder insbesondere dem neunten Verbindungselement lösbar verbindbar sein, insbesondere lösbar drehfest und/oder antreibbar verbindbar sein. Die fünfte Kupplung kann also ausgebildet sein, dass erste gemeinsame Hohlrad, und insbesondere das erste Zwischenelement, mit dem fünften Sonnenrad und/oder insbesondere dem neunten Verbindungselement zu koppeln. Das erste gemeinsame Hohlrad, und insbesondere das erste Zwischenelement, kann mit der sechsten oder über die sechste Kupplung mit dem vierten Sonnenrad und/oder der vierten Bremse und/oder insbesondere dem achten Verbindungselement lösbar verbindbar sein, insbesondere lösbar drehfest und/oder antreibbar verbindbar sein. Die sechste Kupplung kann also ausgebildet sein, das erste gemeinsame Hohlrad, und insbesondere das erste Zwischenelement, mit dem vierten Sonnenrad und/oder der vierten Bremse und/oder insbesondere dem achten Verbindungselement zu koppeln. Das erste gemeinsame Hohlrad, und insbesondere das erste Zwischenelement, kann mit der siebten oder über die siebte Kupplung mit dem zweiten gemeinsamen Planetenträger und/oder insbesondere dem elften Verbindungselement lösbar verbindbar sein, insbesondere lösbar drehfest und/oder antreibbar verbindbar sein. Die siebte Kupplung kann also ausgebildet sein, das erste gemeinsame Hohlrad, und insbesondere das erste Zwischenelement, mit dem zweiten gemeinsamen Planetenträger und/oder insbesondere dem elften Verbindungselement zu koppeln. Der zweiten gemeinsamen Planetenträger, und insbesondere das zehnte Verbindungselement, kann mit der fünften Bremse gegen Drehung haltbar sein, bevorzugt lösbar gegen Drehung haltbar sein. Der zweite gemeinsame Planetenträger, und insbesondere das zehnte Verbindungselement, kann mit der fünften Bremse an ein Zwischengetriebegehäuse koppelbar und/oder mit dem Zwischengetriebegehäuse lösbar verbindbar sein, bevorzugt lösbar gegen Drehung haltbar sein. Die zweite Bremse kann also ausgebildet sein, den zweiten gemeinsamen Planetenträger, und insbesondere das zehnte Verbindungselement, gegen Drehung zu halten.

In Ausgestaltung der Erfindung umfasst die Reversiereinheit einen sechsten Planetenradsatz mit einem sechsten Sonnenrad, einem sechsten Hohlrad, einem sechsten Planetenträger und einem sechsten Planetensatz. Die Reversiereinheit kann parallel oder koaxial zum Antriebselement und/oder dem ersten Abtriebselement angeordnet sein. Der sechste Planetensatz kann einen Satz von sechsten Planetenrädern aufweisen, insbesondere drei sechste Planetenräder. Die sechsten Planetenräder können am sechste Planetenträger drehbar gelagert sein. Der sechste Planetensatz, also insbesondere der Satz von sechsten Planetenrädern, kann mit dem sechsten Sonnenrad und dem sechste Hohlrad kämmen, sich also insbesondere in ständigem Kämmeingriff mit diesen befinden. Die Reversiereinheit kann mindestens zwei, insbesondere genau zwei, Schaltelemente umfassen, die betätigbar sind, bevorzugt selektiv betätigbar, besonders bevorzugt schliessbar und lösbar und/oder einrückbar und/oder schaltbar und/oder selektiv eingreifbar sind, um das zweite gemeinsame Hohlrad, und insbesondere das dritte Zwischenelement, und den sechsten Planetenträger mit dem sechsten Sonnenrad zu verbinden oder um das sechste Hohlrad gegen Drehung zu halten. Die Schaltelemente der Reversiereinheit können eine achte Kupplung und eine sechste Bremse sein. Das zweite gemeinsame Hohlrad, und insbesondere das dritte Zwischenelement, kann mit dem sechsten Planetenträger und der achten Kupplung verbunden oder verbindbar sein, bevorzugt drehfest und/oder antreibbar verbunden oder verbindbar sein. Das sechste Sonnenrad kann mit der achten Kupplung und/oder dem zweiten Zwischenelement und/oder insbesondere dem ersten Abtriebselement verbunden oder verbindbar sein, bevorzugt drehfest verbunden oder verbindbar sein. Das Getriebe, insbesondere die Reversiereinheit, kann ein zwölftes Verbindungselement, insbesondere eine zwölfte Verbindungswelle umfassen. Das zwölfte Verbindungselement kann mit dem sechsten Sonnenrad und/oder achten Kupplung und/oder dem zweiten Zwischenelement und/oder insbesondere dem ersten Abtriebselement verbunden oder verbindbar sein, bevorzugt drehfest und/oder antreibbar verbunden oder verbindbar sein. Der sechste Planetenträger und das zweite gemeinsame Hohlrad, und insbesondere das dritte Zwischenelement, können mit der achten oder über die achte Kupplung mit dem sechsten Sonnenrad und/oder dem zweiten Zwischenelement und/oder insbesondere dem ersten Abtriebselement lösbar verbindbar sein, insbesondere lösbar drehfest und/oder antreibbar verbindbar sein. Die achte Kupplung kann also ausgebildet sein, den sechsten Planetenträger und das zweite gemeinsame Hohlrad, und insbesondere das dritte Zwischenelement, mit dem sechsten Sonnenrad und/oder dem zweiten Zwischenelement und/oder insbesondere dem ersten Abtriebselement zu koppeln. Das sechste Hohlrad kann mit der sechsten Bremse gegen Drehung haltbar, bevorzugt lösbar gegen Drehung haltbar sein. Das sechste Hohlrad kann mit der sechsten Bremse an ein Gehäuse der Reversiereinheit, also das Reversiereinheitsgehäuse, koppelbar und/oder mit diesem lösbar verbindbar sein, bevorzugt lösbar gegen Drehung haltbar sein. Die sechste Bremse kann also ausgebildet sein, das sechste Hohlrad gegen Drehung zu halten. Aufgrund der Kombination der Hauptgetriebeeinheit mit der Reversiereinheit werden vorteilhafterweise, die oben genannten erfindungsgemässen Vorteile erreicht. Darüber hinaus weist die Reversiereinheit aufgrund der beschriebenen Planetenbauweise vorteilhafterweise eine geringe axiale Baulänge auf. Dies wirkt sich insbesondere auf die axiale Baulänge des Getriebes und/oder den Bauraum des Getriebes, insbesondere in einem Zustand, in welchem das Getriebe in das Nutzfahrzeug eingebaut ist, insgesamt vorteilhaft aus.

In Ausgestaltung der Erfindung umfasst die Reversiereinheit einen ersten Radsatz mit einem ersten Losrad und einem ersten Festrad und einen zweiten Radsatz mit einem zweiten Losrad und einem zweiten Festrad. Die Reversiereinheit kann parallel oder koaxial zum Antriebselement und/oder dem ersten Abtriebselement angeordnet sein. Der erste und zweite Festrad können mit dem zweiten gemeinsamen Hohlrad und/oder dem dritten Zwischenelement verbunden sein, insbesondere drehfest und/oder antreibbar verbunden sein. Das erste und zweite Losrad können mit dem ersten Abtriebselement lösbar verbunden oder verbindbar sein, insbesondere lösbar drehfest und/oder antreibbar verbunden oder verbindbar sein. Das erste Losrad kann mit dem ersten Festrad kämmen, sich also insbesondere in ständigem Kämmeingriff mit diesem befinden. Das zweite Losrad kann mit dem zweiten Festrad kämmen, sich also insbesondere in ständigem Kämmeingriff mit diesem befinden. Der zweite Radsatz kann ein Zwischenzahnrad umfassen. Das Zwischenzahnrad kann zur Umkehr der Drehrichtung des zweiten Radsatzes ausgebildet sein. Die Reversiereinheit kann mindestens zwei, insbesondere genau zwei, Schaltelemente umfassen, die betätigbar sind, bevorzugt selektiv betätigbar, besonders bevorzugt schliessbar und lösbar und/oder einrückbar und/oder schaltbar und/oder selektiv eingreifbar sind, um das zweite gemeinsame Hohlrad, und insbesondere das dritte Zwischenelement, über den ersten oder zweiten Radsatz mit dem ersten Abtriebselement zu verbinden. Die zwei Schaltelemente der Reversiereinheit können Kupplungen sein, die insbesondere als Reibschaltelemente und/oder Lamellenschaltelemente ausgeführt sein können. Die Schaltelemente der Reversiereinheit können eine achte und neunte Kupplung sein. Das erste Losrad kann mit der achten Kupplung und/oder dem ersten Abtriebselement verbunden oder verbindbar sein, bevorzugt drehfest und/oder antreibbar verbunden oder verbindbar sein. Das zweite Losrad kann mit der neunten Kupplung und/oder dem ersten Abtriebselement verbunden oder verbindbar sein, bevorzugt drehfest und/oder antreibbar verbunden oder verbindbar sein. Das zweite gemeinsame Hohlrad, und insbesondere das dritte Zwischenelement, können über den ersten Radsatz und mit der achten oder über die achte Kupplung mit dem ersten Abtriebselement lösbar verbindbar sein, insbesondere lösbar drehfest und/oder antreibbar verbindbar sein. Die achte Kupplung kann also ausgebildet sein, dass zweite gemeinsame Hohlrad, und insbesondere das dritte Zwischenelement, über den ersten Radsatz und mit dem ersten Abtriebselement zu koppeln. Das zweite gemeinsame Hohlrad, und insbesondere das dritte Zwischenelement, können über den zweiten Radsatz und mit der neunten oder über die neunte Kupplung mit dem ersten Abtriebselement lösbar verbindbar sein, insbesondere lösbar drehfest und/oder antreibbar verbindbar sein. Die neunte Kupplung kann also ausgebildet sein, dass zweite gemeinsame Hohlrad, und insbesondere das dritte Zwischenelement, über den zweiten Radsatz und mit dem ersten Abtriebselement zu koppeln. Aufgrund der Kombination der Hauptgetriebeeinheit mit der Reversiereinheit werden vorteilhafterweise, die oben genannten erfindungsgemässen Vorteile erreicht. Darüber hinaus weist die Reversiereinheit aufgrund der beschriebenen Planetenbauweise vorteilhafterweise eine geringe axiale Baulänge auf. Dies wirkt sich insbesondere auf die axiale Baulänge des Getriebes und/oder den Bauraum des Getriebes, insbesondere in einem Zustand, in welchem das Getriebe in das Nutzfahrzeug eingebaut ist, insgesamt vorteilhaft aus.

In einer vorteilhaften Weiterbildung des Getriebes umfasst das Getriebe ein Zapfwellenmodul. Das Hinterachsmodul, insbesondere das Hinterachsgehäuse, kann zwischen dem Zapfwellenmodul und der Hauptgetriebeeinheit angeordnet sein. Das Getriebe kann eine Zapfwellen-Antriebswelle umfassen. Das Zapfwellenmodul kann von der Zapfwellen-Antriebswelle antreibbar sein. Dabei kann die Getriebelängsachse koaxial oder parallel zur Zapfwellen-Antriebswelle sein. Die Zapfwellen-Antriebswelle kann insbesondere im Antriebselement angeordnet sein. Ein Zapfwellengehäuse kann die Bauteile des Zapfwellenmoduls aufnehmen. Die Bauteile des Zapfwellenmoduls können die Zapfwellen-Antriebswelle und/oder der Zapfenwellenstummel sowie das Zapfwellen-Getriebe sein. Die Zapfwellen-Antriebswelle kann als Vollwelle ausgeführt sein. Das Antriebselement kann als Hohlwelle ausgeführt sein. Das Antriebselement kann die Zapfwellen-Antriebswelle in sich aufnehmen. Die Zapfwellen-Antriebswelle kann in einem Zustand, bei welchem das Getriebe im Nutzfahrzeug eingebaut ist, vom Antriebsmotor antreibbar sein, insbesondere auch derart gekoppelt sein, dass die Zapfwellen-Antriebswelle mit dem Antriebsmotor antreibbar ist. Das Zapfwellenmodul, insbesondere das Zapfwellengetriebe, kann also durch die Zapfwellen-Antriebswelle, insbesondere auch durch das Hinterachsmodul, mit dem Antriebsmotor durch das Antriebselement antriebsverbunden und/oder antreibbar sein. Auf diese Weise ist vorteilhafterweise eine direkte und damit besonders energieeffiziente Antriebsleistungsübertragung vom Antriebsmotor zu einem Zapfwellenmodul, insbesondere Zapfwellenabtrieb des Nutzfahrzeugs möglich.

In einer vorteilhaften Ausführungsform ist das erste Abtriebselement mit dem zweiten Zwischenelement antreibbar verbunden oder verbindbar, und insbesondere das erste Abtriebselement mit dem zweiten Zwischenelement antreibbar. Bevorzugt können das zweite Zwischenelement und das erste Abtriebselement mit einem Zahnradsatz koppelbar sein. Dazu kann das erste Abtriebselement über den oder mit dem Zahnradsatz antreibbar sein. Der Zahnradsatz kann zwei permanent kämmende Abtriebsräder, ein erstes und ein zweites Abtriebsrad umfassen, die als Festräder ausgebildet sein können. Das erste Abtriebsrad kann drehfest mit dem zweiten Zwischenelement und das zweite Abtriebsrad drehfest mit dem ersten Abtriebselement verbunden sein. Das zweite Abtriebselement kann mit einer Abtriebskupplung verbunden oder verbindbar sein, insbesondere lösbar drehfest und/oder antreibbar verbunden oder verbindbar sein. Die Abtriebskupplung kann mit einem dritten Abtriebsrad drehfest verbunden sein. Das dritte Abtriebsrad kann permanent mit dem zweiten Abtriebsrad kämmen. Das zweite Abtriebselement kann mit dem ersten Abtriebselement antreibbar verbunden oder verbindbar sein, und insbesondere das zweite Abtriebselement mit dem ersten Abtriebselement antreibbar sein. Dadurch kann vorteilhafterweise eine modulare und/oder kompakte Bauweise des Getriebes erreicht werden, da die einzelnen Einheiten des Getriebes, also die Hauptgetriebeeinheit und/oder die Reversiereinheit und/oder das Zwischengetriebe, austauschbar sein können.

Insgesamt sind mit der Hauptgetriebeeinheit in jeder Ausgestaltung mindestens oder genau neun Vorwärtsgänge herstellbar und mit dem Zwischengetriebe in jeder Ausgestaltung mindestens zwei, insbesondere genau zwei oder vier, Vorwärtsgänge herstellbar und mit der Reversiereinheit mindestens oder genau jeweils ein Vorwärts- und ein Rückwärtsgangs herstellbar.

Die Erfindung betrifft weiter ein landwirtschaftliches oder industrielles Nutzfahrzeug, insbesondere ein Traktor oder Schlepper oder eine Baumaschine. Das landwirtschaftliche oder industrielle Nutzfahrzeug umfasst ein Getriebe nach einem der Ansprüche 1 bis Das Nutzfahrzeug kann ausserdem einen Antriebsmotor umfassen. Das Getriebe ist zum Übertragen eines von einem Antriebsmotor erzeugten Drehmoments auf mindestens eine vordere und/oder hintere Antriebsachse eines landwirtschaftlichen oder industriellen Nutzfahrzeugs ausgebildet. Das erfindungsgemässe Nutzfahrzeug weist die oben beschriebenen Vorteile des erfindungsgemässen Getriebes auf.

In Ausgestaltung der Erfindung ist das Getriebe derart im Nutzfahrzeug angeordnet, dass die Getriebelängsachse im Wesentlichen parallel oder koaxial, insbesondere parallel oder koaxial, zu einer Fahrzeuglängsachse ist. Dabei kann die Hauptgetriebeeinheit, und/oder insbesondere die Reversiereinheit und/oder das Zwischengetriebe, entlang der Getriebelängsachse ausgerichtet sein. Das Getriebe kann aber auch derart im Nutzfahrzeug angeordnet sein, dass eine Getriebemittelebene im Wesentlichen parallel oder kongruent zur Fahrzeugmittelebene ist, insbesondere dass die Getriebemittelebene parallel oder kongruent zur Fahrzeugmittelebene ist. Im Nutzfahrzeug mit Antriebsmotor und Getriebe kann mit dem Getriebe ein vom Antriebsmotor erzeugtes Drehmoment auf mindestens eine vordere und/oder hintere Antriebsachse des Nutzfahrzeugs übertragbar sein. Das landwirtschaftliche oder industrielle Nutzfahrzeug kann eine Kabine und ein Fahrgestell umfassen, wobei die Kabine am, insbesondere auf, dem Fahrgestell angeordnet sein kann. Die Achslage des Antriebselements des Getriebes kann durch die Position der Kurbelwelle des Antriebsmotors bestimmt sein. Das erste Abtriebselement kann längsorientiert und in derselben vertikalen Position wie die hintere Antriebsachse sein, deren Achse mit den Hinterrädern koaxial sein kann. Ebenso kann das zweite Abtriebselement, insbesondere eine zweite Ausgangswelle, längsorientiert und in derselben vertikalen Position wie die vordere Antriebsachse sein, deren Achse mit den vorderen Bodeneingriffsmitteln oder Rädern koaxial sein kann. Die vordere und hintere Antriebsachse kann mit dem ersten Abtriebselement antreibbar sein. Es können aber auch die hintere Antriebsachse mit dem ersten Abtriebselement und die vordere Antriebsachse mit dem zweiten Abtriebselement antreibbar sein. Das erfindungsgemässe Nutzfahrzeug weist vorteilhafterweise eine deutlich schlankere und/oder kompakter Bauweise auf und/oder das Getriebe kommt mit weniger Bauraum aus.

Mit dem erfindungsgemässen Getriebe und dem erfindungsgemässen Nutzfahrzeug, das das Getriebe umfasst, können vorteilhafterweise mindestens achtzehn Vorwärtsgänge und insbesondere mindestens achtzehn Rückwärtsgänge zwischen dem Antriebselement und dem ersten Abtriebselement und/oder zweiten Abtriebselement herstellbar und/oder realisierbar sein. Das erfindungsgemässe Getriebe und/oder das erfindungsgemässe Nutzfahrzeug weisen mindestens einen und/oder mehrere der folgenden Vorteile auf:
- Höhere Effizienz und weniger Verlustleistung des Getriebes
- Das Getriebe benötigt weniger Verpackungsvolumen, also einen kleineren Bauraum als bekannte vergleichbare Getriebe.
- Mehr Optionen für das Übersetzungsverhältnis des Getriebes aufgrund der Kombination mehrerer Planetenstufen
- Geringerer Geräuschpegel
- Weniger Kupplungen
- Kompakter Bauraum und insbesondere eine Verringerung des Volumens des Getriebes und/oder des benötigten Bauraums im Nutzfahrzeug
- Koaxiale Anordnung von Antriebs- und erstem und/oder zweitem Abtriebselement
- Das Getriebe weist ein geringeres Gewicht und geringere Herstellkosten als bekannte vergleichbare Getriebe auf
- Höhere Leistungsdichte und höhere Drehmomentkapazität
- Längere Lebensdauer des Getriebes aufgrund der Verwendung von Planetenradsätzen gegenüber bekannten vergleichbaren Getrieben
- Niedriges Trägheitsmoment

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Darstellung eines ersten Ausführungsbeispiels eines erfindungsgemässen landwirtschaftlichen oder industriellen Nutzfahrzeugs mit einem erfindungsgemässen Getriebe, und
- Fig. 2: eine schematische Darstellung eines ersten Ausführungsbeispiels des erfindungsgemässen Getriebes, und
- Fig. 3: eine schematische Darstellung eines zweiten Ausführungsbeispiels des erfindungsgemässen Getriebes, und
- Fig. 4: eine schematische Darstellung eines dritten Ausführungsbeispiels des erfindungsgemässen Getriebes, und
- Fig. 5: eine schematische Darstellung eines Schaltschemas des ersten Ausführungsbeispiels des erfindungsgemässen Getriebes, und
- Fig. 6: eine schematische Darstellung eines Schaltschemas des zweiten Ausführungsbeispiels des erfindungsgemässen Getriebes, und
- Fig. 7: eine schematische Darstellung eines Schaltschemas des dritten Ausführungsbeispiels des erfindungsgemässen Getriebes.

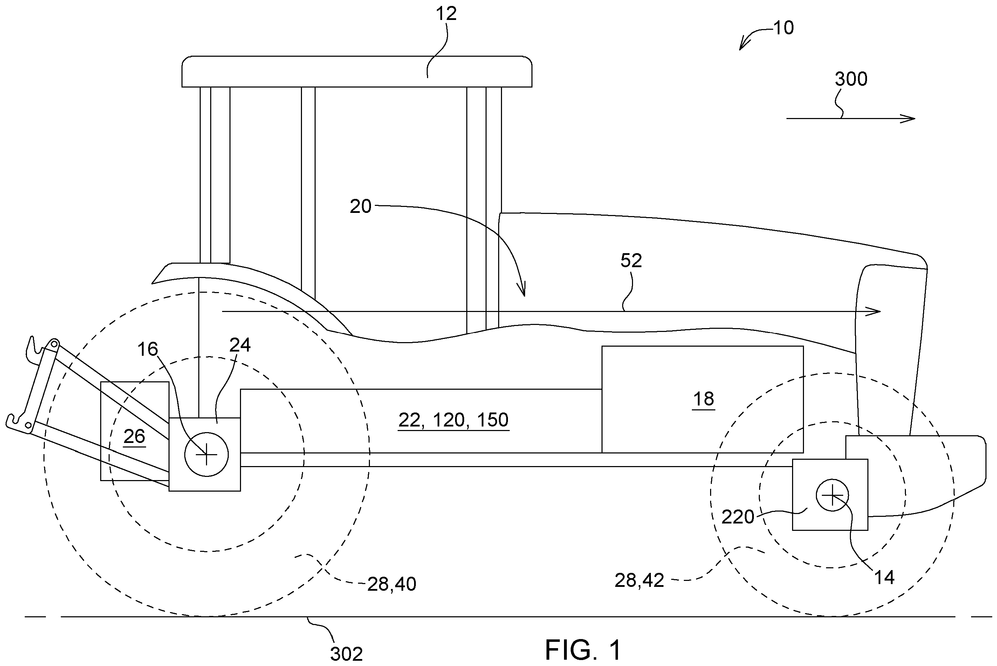

Figur 1 zeigt eine schematische Darstellung eines ersten Ausführungsbeispiels eines erfindungsgemässen landwirtschaftlichen oder industriellen Nutzfahrzeugs 10, insbesondere eines Traktors oder Schleppers, mit einem erfindungsgemässen Getriebe 20. Der grundsätzliche Aufbau eines Nutzfahrzeugs 10 wird als dem Fachmann bekannt angenommen. Das Nutzfahrzeug 10 umfasst eine Kabine 12, eine vordere Antriebsachse 14 und eine hintere Antriebsachse 16. Die hintere Antriebsachse 16 kann permanent und die vordere Antriebsachse 14 kann bedarfsweise zuschaltbar sein oder permanent angetrieben werden. Das Nutzfahrzeug 10 umfasst ferner einen Antriebsmotor 18, der als Verbrennungskraftmaschine ausgeführt sein kann. Das Getriebe 20 weist eine Antriebsstrangarchitektur auf, die, wie nachfolgend beschrieben, aus verschiedenen einzelnen Getriebemodulen zusammengesetzt sein kann. Die vorliegend beschriebene Antriebsstrangarchitektur kann im Kraft- und Drehmomentfluss, ausgehend vom Antriebsmotor 18, ein erfindungsgemässes Getriebe 20 mit einer Hauptgetriebeeinheit 22 und insbesondere einem Hinterachsmodul 24 und einem Zapfwellenmodul 26 aufweisen.

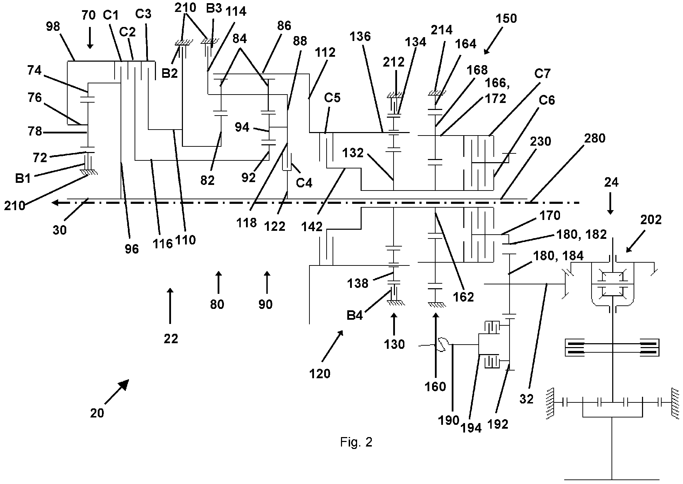

Dabei ist das Getriebe 20, insbesondere die Hauptgetriebeeinheit 22, dem Antriebsmotor 18 entgegen der Vorwärtsfahrrichtung 300 des Nutzfahrzeugs 10 nachgelagert und/oder entlang einer Fahrzeuglängsachse 52, also einer Längsachse 52 des Nutzfahrzeugs 10, angeordnet. Das Getriebe 20, insbesondere die Hauptgetriebeeinheit 22, ist mit dem Antriebsmotor 18 antriebsverbunden und/oder kann mit dem Antriebsmotor 18 antreibbar sein. Das Hinterachsmodul 24 kann dem Getriebe 20, insbesondere der Hauptgetriebeeinheit 22 oder einer Reversiereinheit 120 oder einem Zwischengetriebe 150, nachgelagert sein. Dabei kann das Hinterachsmodul 24 mit der Hauptgetriebeeinheit 22 oder der Reversiereinheit 120 oder dem Zwischengetriebe 150 antriebsverbunden und/oder antreibbar sein. Mit dem gezeigten Getriebe 20 kann ein Kraft- und Drehmoment des Antriebsmotors 18 mit unterschiedlichen Gangstufen auf ein erstes Abtriebselement (siehe Figuren 2, Bezugszeichen 32) und/oder ein zweites Abtriebselement (siehe Figur 2, Bezugszeichen 190) übertragen werden.

Das erste Abtriebselement 32 und/oder das zweite Abtriebselement 190 können wiederum in Antriebsverbindung mit der hinteren und/oder vorderen Antriebsachse 14, 16 stehen. Ebenso kann aber auch das erste Abtriebselement in Antriebsverbindung mit der hinteren Antriebsachse 16 und das zweite Abtriebselement 190 in Antriebsverbindung mit der vorderen Antriebsachse 14 stehen. Es können also die vordere und/oder hintere Antriebsachse 14, 16 mit dem ersten Abtriebselement 32 antreibbar sein, insbesondere kann ein Kraft- und Drehmoment vom ersten Abtriebselement 32 auf die vordere und/oder hintere Antriebsachse 14, 16 übertragen werden. Es kann aber auch die hintere Antriebsachse 16 mit dem ersten Abtriebselement 32 und/oder die vorderen Antriebsachse 14 mit dem zweiten Abtriebselement 190 antreibbar sein, insbesondere kann ein Kraft- und Drehmoment vom ersten Abtriebselement 32 auf die hintere Antriebsachse 16 übertragen werden und/oder ein Kraft- und Drehmoment vom zweiten Abtriebselement 190 auf die vordere Antriebsachse 14 übertragen werden. Die vordere und/oder hintere Antriebsachse 14, 16 wandeln eine Drehung des ersten und/oder zweiten Abtriebselements 32, 190 in eine Drehung eines oder mehrerer Bodeneingriffsmittel 28 und somit in einen Vorschub des Nutzfahrzeugs um. Das Nutzfahrzeug kann daher abhängig von einer im Getriebe 20 gewählten Gangstufe mit unterschiedlicher Drehzahl angetrieben werden. Folglich ist ein mit dem Getriebe 20 ausgestattetes Nutzfahrzeug 10 abhängig von der im Getriebe 20 gewählten Gangstufe in unterschiedlichen Geschwindigkeitsbereichen bewegbar.

Das Zugfahrzeug 10 kann eines oder mehrere Bodeneingriffsmittel 28, hier in Form von Rädern 40, 42 dargestellt, aufweisen, welche mit einem Untergrund 302 zur Obertragung von Antriebskräften in Eingriff stehen und/oder durch die sich das Zugfahrzeug 10 auf dem Untergrund abstützt. Das Zugfahrzeug 10 kann ausserdem ein Fahrgestell (nicht dargestellt) aufweisen, wobei das Fahrgestell insbesondere von den an der vorderen und hinteren Antriebsachse 14, 16 aufgehängten Rädern 28 getragen werden kann.

Figur 2 zeigt eine schematische Darstellung eines ersten Ausführungsbeispiels des erfindungsgemässen Getriebes 20. Das in Figur 2 gezeigte Getriebe 20 entspricht im Wesentlichen dem in Figur 1 gezeigten Getriebe, weshalb im Folgenden lediglich auf in Figur 1 nicht gezeigte Details eingegangen wird. Das Nutzfahrzeug 10 gemäss Figur 1 kann das Getriebe 20, wie in Figur 2 dargestellt, umfassen. Das Getriebe 20 zum Übertragen eines von einem Antriebsmotor 18 erzeugten Drehmoments auf mindestens eine vordere und/oder hintere Antriebsachse 14, 16 des landwirtschaftlichen oder industriellen Nutzfahrzeugs 10 umfasst ein Antriebselement 30 und das erste Abtriebselement 32 und eine Hauptgetriebeeinheit 22. Die Hauptgetriebeeinheit 22 umfasst einen ersten, zweiten und dritten Planetenradsatz 70, 80, 90. Der erste Planetenradsatz 70 weist ein erstes Sonnenrad 72, ein erstes Hohlrad 74, einen ersten Planetenträger 76 und einen ersten Planetensatz 78 auf. Der zweite Planetenradsatz 80 weist ein zweites Sonnenrad 82 auf. Der dritte Planetenradsatz 90 weist ein drittes Sonnenrad 92 und einen dritten Planentensatz 94 auf. Darüber hinaus weisen der zweite und dritte Planetenradsatz 80, 90 einen ersten gemeinsamen Planetensatz 84 und ein erstes gemeinsames Hohlrad 86 und einen ersten gemeinsamen Planetenträger 88 auf.

Das Antriebselement 30 ist mit dem ersten Hohlrad 74 verbunden, bevorzugt drehfest und/oder antreibbar verbunden, und der ersten Kupplung C1 verbindbar, bevorzugt drehfest und/oder antreibbar verbindbar. Die Hauptgetriebeeinheit 22 kann ein erstes Verbindungselement 96 umfassen. Das erste Verbindungselement 96 kann mit dem Antriebselement 30 und dem ersten Hohlrad 74 verbunden sein, bevorzugt drehfest und/oder antreibbar verbunden sein und der ersten Kupplung C1 verbindbar sein, bevorzugt drehfest und/oder antreibbar verbindbar sein. Der erste Planetenträger 76 ist mit der ersten Kupplung C1 und der zweiten Kupplung C2 und der dritten Kupplung C3 verbunden, bevorzugt drehfest und/oder antreibbar verbunden. Ebenso kann die Hauptgetriebeeinheit 22 ein zweites Verbindungselement 98 umfassen. Das zweite Verbindungselement 98 kann mit dem ersten Planetenträger 76 und der ersten Kupplung C1 und der zweiten Kupplung C2 und der dritten Kupplung C3 verbunden sein, bevorzugt drehfest und/oder antreibbar verbunden sein. Darüber hinaus ist das zweite Sonnenrad 82 mit der zweiten Bremse B2 und/oder der dritten Kupplung C3 verbunden oder verbindbar, insbesondere drehfest und/oder antreibbar verbunden oder verbindbar. Das Getriebe 20, insbesondere die Hauptgetriebeeinheit 22, kann ein drittes Verbindungselement 110, insbesondere eine dritte Verbindungswelle umfassen. Das dritte Verbindungselement 110 kann mit dem zweiten Sonnenrad 82 und/oder der zweiten Bremse B2 und/oder der dritten Kupplung C3 verbunden oder verbindbar sein, bevorzugt drehfest und/oder antreibbar verbunden oder verbindbar sein. Das dritte Sonnenrad 92 ist mit der zweiten Kupplung C2 verbindbar, insbesondere drehfest und/oder antreibbar verbindbar. Das Getriebe 20, insbesondere die Hauptgetriebeeinheit 22, kann ein viertes Verbindungselement 116, insbesondere eine vierte Verbindungswelle umfassen. Das vierte Verbindungselement 116 kann mit dem dritten Sonnenrad 92 verbunden sein, bevorzugt drehfest und/oder antreibbar verbunden sein und der zweiten Kupplung C2 verbindbar sein, bevorzugt drehfest und/oder antreibbar verbindbar sein. Ebenso ist der erste gemeinsame Planetenträger 88 mit der dritten Bremse B3 verbunden oder verbindbar. Das Getriebe 20, insbesondere die Hauptgetriebeeinheit 22, kann ein fünftes Verbindungselement 114, insbesondere eine fünfte Verbindungswelle umfassen. Das fünfte Verbindungselement 114 kann mit der dritten Bremse B3 und/oder dem ersten gemeinsamen Planetenträger 88 verbunden oder verbindbar sein, bevorzugt drehfest und/oder antreibbar verbunden oder verbindbar sein. Im Speziellen kann das Getriebe 20, insbesondere die Hauptgetriebeeinheit 22 ein erstes Zwischenelement 112 umfassen. Das erste Zwischenelement 112 kann mit dem ersten gemeinsamen Hohlrad 86 verbunden sein, bevorzugt drehfest und/oder antreibbar verbunden sein. Das Antriebselement 30 ist mit der vierten Kupplung C4 verbunden, bevorzugt drehfest und/oder antreibbar verbunden. Das Getriebe 20, insbesondere die Hauptgetriebeeinheit 22, kann ein sechstes Verbindungselement 122, insbesondere eine sechste Verbindungswelle umfassen. Das sechste Verbindungselement 122 kann mit dem Antriebselement 30 und der vierten Kupplung C4 verbunden sein, bevorzugt drehfest und/oder antreibbar verbunden sein. Die vierte Kupplung C4 ist mit dem ersten gemeinsamen Planetenträger 88 verbindbar, bevorzugt drehfest und/oder antreibbar verbindbar. Das Getriebe 20, insbesondere die Hauptgetriebeeinheit 22, kann ein siebtes Verbindungselement 118, insbesondere eine siebte Verbindungswelle umfassen. Das siebte Verbindungselement 118 kann mit dem ersten gemeinsamen Planetenträger 88 und der vierten Kupplung C4 verbunden oder verbindbar sein, bevorzugt drehfest und/oder antreibbar verbunden oder verbindbar sein. Das erste Sonnenrad 72 ist mit der ersten Bremse B1 lösbar gegen Drehung haltbar. Das erste Sonnenrad 72 ist mit der ersten Bremse B1 an ein Hauptgetriebegehäuse 210 koppelbar und/oder lösbar mit dem Hauptgetriebegehäuse 210 verbindbar. Das Antriebselement 30, und insbesondere das erste Verbindungselement 96, ist mit dem ersten Hohlrad 74 verbunden. Das Antriebselement 30, und insbesondere das erste Verbindungselement 96, ist mit der ersten oder über die erste Kupplung C1 mit dem ersten Planetenträger 76 und/oder der zweiten Kupplung C2 und/oder insbesondere dem zweiten Verbindungselement 98 und/oder der dritten Kupplung C3 lösbar verbindbar, insbesondere lösbar drehfest und/oder antreibbar verbindbar. Der erste Planetenträger 76, und insbesondere das zweite Verbindungselement 98, kann mit der zweiten oder über die zweite Kupplung C2 mit dem dritten Sonnenrad 92 und/oder insbesondere dem vierten Verbindungselement 116 lösbar verbindbar oder verbunden sein, insbesondere lösbar drehfest und/oder antreibbar verbindbar oder verbunden sein. Der erste Planetenträger 76, und insbesondere das zweite Verbindungselement 98, ist mit der dritten oder über die dritte Kupplung C3 mit dem zweiten Sonnenrad 82 und/oder der zweiten Bremse B2 und/oder insbesondere dem dritten Verbindungselement 110 lösbar verbindbar, insbesondere lösbar drehfest und/oder antreibbar verbindbar. Das zweite Sonnenrad 82, und insbesondere das dritte Verbindungselement 110, ist mit der zweiten Bremse B2 lösbar gegen Drehung haltbar. Das zweite Sonnenrad 82 ist mit der zweiten Bremse B2 an das Hauptgetriebegehäuse 210 koppelbar und/oder mit dem Hauptgetriebegehäuse 210 lösbar verbindbar. Der erste gemeinsame Planetenträger 88 und/oder der erste gemeinsame Planetensatz 84 und/oder der dritte Planetensatz 94, und insbesondere das fünfte Verbindungselement 114, sind mit der dritten Bremse B3 lösbar gegen Drehung haltbar. Der erste gemeinsame Planetenträger 88 und/oder der erste gemeinsame Planetensatz 84 und/oder der dritte Planetensatz 94, und insbesondere das fünfte Verbindungselement 114, können mit der dritten Bremse B3 an das Hauptgetriebegehäuse 210 koppelbar und/oder mit dem Hauptgetriebegehäuse 210 lösbar verbindbar sein. Das Antriebselement 30, und insbesondere das sechste Verbindungselement 122, ist mit der vierten oder über die vierte Kupplung C4 mit dem ersten gemeinsamen Planetenträger 88 und/oder insbesondere dem siebten Verbindungselement 118 lösbar verbindbar oder verbunden sein, insbesondere lösbar drehfest und/oder antreibbar verbindbar oder verbunden sein. Dadurch kann vorteilhafterweise eine optimale kompakte Packungsdichte des Getriebes 20, insbesondere der Hauptgetriebeeinheit 22, erreicht werden, insbesondere auch eine kompakte räumliche Anordnung des Getriebes 20 im Nutzfahrzeug in einem im Nutzfahrzeug 10 verbauten Zustand.

Das Getriebe 20 umfasst weiter eine Reversiereinheit 120. Die Reversiereinheit 120 umfasst einen vierten Planetenradsatz 130 mit einem vierten Sonnenrad 132, einem vierten Hohlrad 134, einem vierten Planetenträger 136 und einem vierten Planetensatz 138. Die Reversiereinheit 120 umfasst zwei Schaltelemente B4, C5, die betätigbar sind, bevorzugt selektiv betätigbar sind, besonders bevorzugt schliessbar und lösbar und/oder einrückbar und/oder schaltbar und/oder selektiv eingreifbar sind, sodass das erste gemeinsame Hohlrad 86, und insbesondere das erste Zwischenelement 112, mit dem vierten Sonnenrad 132 verbindbar ist oder das vierte Hohlrad 134 gegen Drehung haltbar ist. Die Schaltelemente der Reversiereinheit 120 sind eine fünfte Kupplung C5 und eine vierte Bremse B4. Das erste gemeinsame Hohlrad 86, und insbesondere das erste Zwischenelement 112, ist mit dem vierten Planetenträger 136 und der fünften Kupplung C5 verbunden oder verbindbar, bevorzugt drehfest und/oder antreibbar verbunden oder verbindbar. Das vierte Sonnenrad 132 kann mit einem fünften Sonnenrad 162 und/oder der fünften Kupplung C5 und/oder einer sechsten Kupplung C6 verbunden oder verbindbar sein, bevorzugt drehfest und/oder antreibbar verbunden oder verbindbar sein. Die Reversiereinheit 120 kann ein achtes Verbindungselement 142, insbesondere eine achte Verbindungswelle umfassen. Das achte Verbindungselement 142 kann mit dem vierten Sonnenrad 132 und einem fünften Sonnenrad 162 und/oder der fünften Kupplung C5 und/oder der sechsten Kupplung C6 verbunden oder verbindbar sein, bevorzugt drehfest und/oder antreibbar verbunden oder verbindbar sein. Der vierte Planetenträger 136 und das erste gemeinsame Hohlrad 86, und insbesondere das erste Zwischenelement 112, sind mit der fünften oder über die fünfte Kupplung C4 mit dem vierten Sonnenrad 132 und/oder insbesondere dem achten Verbindungselement 142 lösbar verbindbar, insbesondere lösbar drehfest verbindbar. Das vierte Hohlrad 134 ist mit der vierten Bremse B4 lösbar gegen Drehung haltbar. Das vierte Hohlrad 134 kann mit der vierten Bremse B4 an das Reversiereinheitsgehäuse 212 koppelbar und/oder mit diesem lösbar verbindbar sein.

Im Weiteren umfasst das Getriebe 20 ein Zwischengetriebe 150. Das Zwischengetriebe 150 weist einen fünften Planetenradsatz 160 mit einem fünften Sonnenrad 162, einem fünften Hohlrad 164, einem fünften Planetenträger 166 und einem fünften Planetensatz 168. Die zwei Schaltelemente C6, C7 des Zwischengetriebes 150 sind die sechste Kupplung C6 und eine siebte Kupplung C7. Die Schaltelemente C6, C7 des Zwischengetriebes 150 sind betätigbar, bevorzugt selektiv betätigbar sind, besonders bevorzugt schliessbar und lösbar und/oder einrückbar und/oder schaltbar und/oder selektiv eingreifbar sind, um das fünfte Sonnenrad 162 oder den fünften Planetenträger 166 und den fünften Planetensatz 168 mit einem zweiten Zwischenelement 170 und/oder dem ersten Abtriebselement 32 zu verbinden. Das fünfte Sonnenrad 162 ist mit dem vierten Sonnenrad 132 und/oder der fünften Kupplung C5 und/oder der sechsten Kupplung C6 verbunden oder verbindbar, bevorzugt drehfest und/oder antreibbar verbunden oder verbindbar. Das achte Verbindungselement 142 ist mit dem vierten und fünften Sonnenrad 132, 162 und/oder der fünften Kupplung C5 und/oder einer sechsten Kupplung C6 verbunden oder verbindbar, bevorzugt drehfest und/oder antreibbar verbunden oder verbindbar. Ausserdem ist der fünfte Planetenträger 164 mit der siebten Kupplung C7 verbunden oder verbindbar, insbesondere drehfest und/oder antreibbar verbunden oder verbindbar. Das Getriebe 20, insbesondere das Zwischengetriebe 150, kann ein neuntes Verbindungselement 172, insbesondere eine neunte Verbindungswelle umfassen. Das neunte Verbindungselement 172 kann mit der siebten Kupplung C7 und/oder dem fünften Planetenträger 164 verbunden oder verbindbar sein, bevorzugt drehfest und/oder antreibbar verbunden oder verbindbar sein.

Das fünfte Sonnenrad 162 und das vierte Sonnenrad 132, und insbesondere das achte Verbindungselement 142, sind mit der sechsten oder über die sechste Kupplung C6 mit dem zweiten Zwischenelement 170 und/oder insbesondere dem ersten Abtriebselement 32 lösbar verbindbar, insbesondere lösbar drehfest und/oder antreibbar verbindbar. Der fünfte Planetenträger 166, und insbesondere das neunte Verbindungselement 172, ist mit der siebten oder über die siebte Kupplung C7 mit dem zweiten Zwischenelement 170 und/oder insbesondere dem ersten Abtriebselement 32 lösbar verbindbar, insbesondere lösbar drehfest verbindbar. Das fünfte Hohlrad 164 ist gegen Drehung gehalten. Das fünfte Hohlrad 164 kann an das Zwischengetriebegehäuse 214 gekoppelt und/oder gegen Drehung gehalten sein. Das erste Abtriebselement 32 ist mit dem zweiten Zwischenelement 170 verbunden und/oder koppelbar und/oder antreibbar. Dazu können das zweite Zwischenelement 170 und das erste Abtriebselement 32 mit einem Zahnradsatz 180 gekoppelt und/oder das erste Abtriebselement 32 mit dem zweiten Zwischenelement 170 antreibbar sein. Der Zahnradsatz 180 umfasst zwei permanent kämmende Abtriebsräder, insbesondere ein erstes und ein zweites Abtriebsrad 182, 184, die als Festräder ausgebildet sind. Das erste Abtriebsrad 182 ist drehfest mit dem zweiten Zwischenelement 170 und das zweite Abtriebsrad 184 drehfest mit dem ersten Abtriebselement 32 verbunden. Das zweite Abtriebselement 190 ist mit einer Abtriebskupplung 194 verbunden oder verbindbar, insbesondere lösbar drehfest und/oder antreibbar verbunden oder verbindbar. Die Abtriebskupplung 194 ist mit einem dritten Abtriebsrad 192 drehfest verbunden. Das dritte Abtriebsrad 192 kämmt permanent mit dem zweiten Abtriebsrad 184. Die Abtriebskupplung 194 kann schliessbar sein, sodass das zweite Abtriebselement 190 mit dem ersten Abtriebselement 32 antreibbar ist.

Das Getriebe 20 kann ausserdem ein die Hauptgetriebeeinheit 22 aufnehmendes Hauptgetriebegehäuse 210 und/oder ein die Reversiereinheit 120 aufnehmendes Reversiereinheitsgehäuse 212 und/oder ein das Zwischengetriebe 150 aufnehmendes Zwischengetriebegehäuse 214 und/oder ein Hinterachsmodul 24 aufnehmendes Hinterachsgehäuse 216 umfassen. Das Hauptgetriebegehäuse 210 kann zumindest teilweise oder vollständig das Antriebselement 30 und den ersten, zweiten und dritten Planetenradsatz 70, 80, 90 aufnehmen. Das Reversiereinheitsgehäuse 212 kann am, insbesondere unmittelbar am, Hauptgetriebegehäuse 210 angeordnet sein und/oder das Zwischengetriebegehäuse 214 kann am, insbesondere unmittelbar am, Reversiereinheitsgehäuse 212 angeordnet sein. Zwischen der Hauptgetriebeeinheit 22 kann über die Reversiereinheit 120 zur Zwischengetriebe 150 und dann zum Hinterachsmodul 24 ein Kraft- und/oder Drehmomentfluss herstellbar sein. Die Reversiereinheit 120 kann also der Hauptgetriebeeinheit 22 in Richtung des Kraft- und/oder Drehmomentfluss nachgeordnet sein. Ebenso kann das Zwischengetriebe 150 der Reversiereinheit 120 in Richtung des Kraft- und/oder Drehmomentfluss nachgeordnet sein. Ausserdem kann das Hinterachsmodul 24 dem Zwischengetriebe 150 in Richtung des Kraft- und/oder Drehmomentfluss nachgeordnet sein. Das Hauptgetriebegehäuse 210 kann auch zumindest teilweise oder vollständig das zweite Abtriebselement 190 aufnehmen. Das Hauptgetriebegehäuse 210 und/oder das Reversiereinheitsgehäuse 212 und/oder das Zwischengetriebegehäuse 214 können im Speziellen auch als ein Gehäuse, also einem Getriebegehäuse, mit einzelnen Abschnitten im Getriebegehäuse ausgebildet sein.

Das Hinterachsmodul 24 kann ein Hinterachsdifferential 202 und/oder die hintere Antriebsachse 16 umfassen. Ausserdem kann das Hinterachsmodul 24 insbesondere das Hinterachsdifferential 202, ein Hinterachsritzel und ein Hinterachszahnrad umfassen. Das Hinterachsdifferential 202 kann ein Hinterachsritzel, beispielsweise ein Antriebskegelrad oder ein Kegelritzel, sowie ein Hinterachszahnrad, beispielsweise ein Kegel- oder Ringzahnrad, umfassen. Zusätzlich kann das Getriebe 20 ein Vorderachsmodul 220 (siehe Figur 1) mit einem Vorderachsdifferential (nicht dargestellt) und/oder der vorderen Antriebsachse 14 umfassen. Das Vorderachsgehäuse (nicht dargestellt) kann das Vorderachsmodul 220, insbesondere das Vorderachsdifferenzial (nicht dargestellt) und/oder zumindest teilweise die vordere Antriebsachse 14 aufnehmen. Das Vorderachsdifferential (nicht dargestellt) kann ein Vorderachsritzel (nicht dargestellt), beispielsweise ein Antriebskegelrad oder ein Kegelritzel, sowie ein Vorderachszahnrad, beispielsweise ein Kegel- oder Ringzahnrad, umfassen. Das zweite Abtriebselement 190 kann mit dem Vorderachsritzel verbunden sein oder das Vorderachsritzel und das zweite Abtriebselement 190 können als ein einteiliges Bauteil ausgebildet sein. Das Getriebe 20 kann auch das Zapfwellenmodul 26 umfassen und/oder das Hinterachsmodul 24 zwischen dem Zapfwellenmodul 26 und dem Zwischengetriebe 150 angeordnet sein. Ausserdem kann das Getriebe 20 eine Zapfwellen-Antriebswelle 230 umfassen. Die Zapfwellen-Antriebswelle 230 kann mit dem Antriebsmotor 20, insbesondere der Kurbelwelle, entweder direkt oder beispielsweise mit einem weiteren Koppelelement oder einer verzahnten oder geschraubten Verbindung oder mittels einer weiteren Antriebswelle (nicht dargestellt) verbunden sein. Dadurch kann die Zapfwellen-Antriebswelle 230 mit der Kurbelwelle antreibbar und eine Kraft und/oder ein Drehmoment von der Kurbelwelle auf die Zapfwellen-Antriebswelle 230 übertragbar sein. Die Zapfwellen-Antriebswelle 230 kann teilweise oder vollständig im Antriebselement 30 angeordnet sein. Die Zapfwellen-Antriebswelle 230 kann zumindest teilweise in der Hauptgetriebeeinheit 22, insbesondere dem Hauptgetriebegehäuse 210, und/oder der Reversiereinheit 120, insbesondere dem Reversiereinheitsgehäuse 212, und/oder der Zwischengetriebe 150, insbesondere dem Zwischengetriebegehäuse 214, und/oder dem Hinterachsmodul 24, insbesondere dem Hinterachsgehäuse 216, und/oder dem Zapfwellenmodul 26, insbesondere einem Zapfwellengehäuse angeordnet sein. Ebenso kann das Zapfwellenmodul 26 einen Zapfwellenstummel (nicht dargestellt) umfassen. Das Zapfwellengehäuse kann zumindest teilweise die Zapfwellen-Antriebswelle 230 und/oder zumindest teilweise den Zapfwellenstummel aufnehmen.

Somit sind mindestens, insbesondere genau, drei Schaltelemente B1, B2, B3, C1, C2, C3, C4 der Hauptgetriebeeinheit 22 und mindestens, insbesondere genau, ein Schaltelement C6, C7 des Zwischengetriebes 150 und mindestens, insbesondere genau, ein Schaltelement B4, C5 der Reversiereinheit 120 in Kombinationen von mindestens fünf, insbesondere genau fünf Schaltelementen betätigbar, bevorzugt selektiv betätigbar, besonders bevorzugt schliessbar und lösbar und/oder einrückbar und/oder schaltbar und/oder selektiv eingreifbar, um mindestens, insbesondere genau, 18 (achtzehn) Vorwärtsgänge, und insbesondere mindestens oder genau achtzehn Rückwärtsgänge, zwischen dem Antriebselement 30 und dem ersten Abtriebselement 32 und/oder dem zweiten Abtriebselement 190 herzustellen. Es kann aber auch nur ein Teil der achtzehn Rückwärtsgänge, also weniger als achtzehn Rückwärtsgänge, tatsächlich verwendet werden.

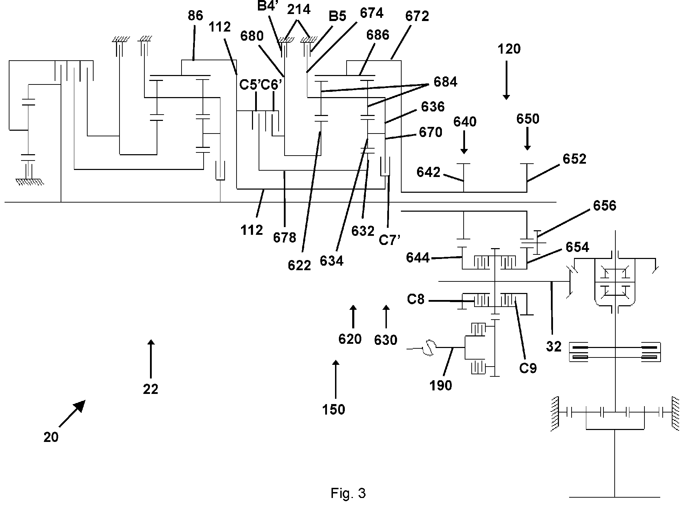

Figur 3 zeigt eine schematische Darstellung eines zweiten Ausführungsbeispiels des erfindungsgemässen Getriebes 20. Das in Figur 3 gezeigte Getriebe 20 entspricht im Wesentlichen den in den Figuren 1 bis 2 gezeigten Getrieben 20, sodass im Folgenden lediglich auf Details und/oder Unterschiede eingegangen wird. Das Nutzfahrzeug 10 gemäss Figur 1 kann das Getriebe 20, wie in Figur 3 dargestellt, umfassen. Das Zwischengetriebe 150 umfasst einen vierten Planetenradsatz 620 mit einem vierten Sonnenrad 622 und einen fünften Planetenradsatz 630 mit einem fünften Sonnenrad 632 und einem fünften Planentensatz 634. Der vierte und fünfte Planetenradsatz 620, 630 weisen einen zweiten gemeinsamen Planetensatz 684 und ein zweites gemeinsames Hohlrad 686 und einen zweiten gemeinsamen Planetenträger 636 auf. Das Zwischengetriebe 150 umfasst genau fünf Schaltelemente. Die fünf Schaltelemente des Zwischengetriebes 150 sind eine fünfte Kupplung C5' und eine sechste Kupplung C6' und eine siebte Kupplung C7' und eine vierte und fünfte Bremse B4', B5. Das erste Zwischenelement 112 ist mit der fünften Kupplung C5' und/oder der sechsten Kupplung C6' und/oder der siebten Kupplung C7' und/oder dem fünften Sonnenrad 632 verbunden oder verbindbar, bevorzugt drehfest und/oder antreibbar verbunden oder verbindbar. Das vierte Sonnenrad 622 ist mit der vierten Bremse B4' und/oder der sechsten Kupplung C6' verbunden oder verbindbar, bevorzugt drehfest und/oder antreibbar verbunden oder verbindbar. Ebenso kann das Getriebe 20, insbesondere das Zwischengetriebe 150, ein achtes Verbindungselement 680, insbesondere eine achte Verbindungswelle umfassen. Das achte Verbindungselement 680 kann mit dem vierten Sonnenrad 622 und/oder der sechsten Kupplung C6' und/oder vierten Bremse B4' verbunden oder verbindbar sein, bevorzugt drehfest und/oder antreibbar verbunden oder verbindbar sein. Darüber hinaus ist das fünfte Sonnenrad 632 mit der fünften Kupplung C5' verbindbar, insbesondere drehfest und/oder antreibbar verbindbar. Das Getriebe 20, insbesondere das Zwischengetriebe 150, kann ein neuntes Verbindungselement 678, insbesondere eine neunte Verbindungswelle umfassen. Das neunte Verbindungselement 678 kann mit dem fünften Sonnenrad 632 und/oder der fünften Kupplung C5' verbunden oder verbindbar sein, bevorzugt drehfest und/oder antreibbar verbunden oder verbindbar sein. Ebenso ist der zweite gemeinsame Planetenträger 636 mit der fünften Bremse B5 verbunden oder verbindbar, insbesondere drehfest und/oder antreibbar verbunden oder verbindbar. Das Getriebe 20, insbesondere das Zwischengetriebe 150, kann ein zehntes Verbindungselement 674, insbesondere eine zehnte Verbindungswelle umfassen. Das zehnte Verbindungselement 674 kann mit der fünften Bremse B5 und/oder dem zweiten gemeinsamen Planetenträger 636 verbunden oder verbindbar sein, bevorzugt drehfest und/oder antreibbar verbunden oder verbindbar sein. Das zweite gemeinsame Hohlrad 686 kann mit einem dritten Zwischenelement 672, insbesondere einer dritten Zwischenwelle, verbunden sein, bevorzugt drehfest und/oder antreibbar verbunden sein. Darüber hinaus ist der zweite gemeinsame Planetenträger 636 mit der siebten Kupplung C7' verbunden oder verbindbar, insbesondere drehfest und/oder antreibbar verbunden oder verbindbar. Das Getriebe 20, insbesondere das Zwischengetriebe 150, kann ein elftes Verbindungselement 670, insbesondere eine elfte Verbindungswelle umfassen. Das elfte Verbindungselement 670 kann mit der siebten Kupplung C7' und/oder dem zweiten gemeinsamen Planetenträger 636 verbunden oder verbindbar sein, bevorzugt drehfest und/oder antreibbar verbunden oder verbindbar sein. Das vierte Sonnenrad 622, und insbesondere das achte Verbindungselement 680, ist mit der vierten Bremse B4' gegen Drehung haltbar, bevorzugt lösbar gegen Drehung haltbar. Das vierte Sonnenrad 622, und insbesondere das achte Verbindungselement 680, kann mit der vierten Bremse an das Zwischengetriebegehäuse 214 koppelbar und/oder lösbar mit dem Zwischengetriebegehäuse 214 verbindbar sein. Das erste gemeinsame Hohlrad 86, und insbesondere das erste Zwischenelement 112, ist mit der fünften oder über die fünfte Kupplung C5' mit dem fünften Sonnenrad 632 und/oder insbesondere dem neunten Verbindungselement 678 lösbar verbindbar, insbesondere lösbar drehfest und/oder antreibbar verbindbar. Das erste gemeinsame Hohlrad 86, und insbesondere das erste Zwischenelement 112, ist mit der sechsten oder über die sechste Kupplung C6' mit dem vierten Sonnenrad 622 und/oder der vierten Bremse B4' und/oder insbesondere dem achten Verbindungselement 680 lösbar verbindbar, insbesondere lösbar drehfest und/oder antreibbar verbindbar. Das erste gemeinsame Hohlrad 86, und insbesondere das erste Zwischenelement 112, ist mit der siebten oder über die siebte Kupplung C7' mit dem zweiten gemeinsamen Planetenträger 636 und/oder insbesondere dem elften Verbindungselement 670 lösbar verbindbar, insbesondere lösbar drehfest und/oder antreibbar verbindbar. Der zweite gemeinsame Planetenträger 636, und insbesondere das zehnte Verbindungselement 674, ist mit der fünften Bremse B5 gegen Drehung haltbar, bevorzugt lösbar gegen Drehung haltbar. Der zweite gemeinsame Planetenträger 636, und insbesondere das zehnte Verbindungselement 674, kann mit der fünften Bremse B5 an ein Zwischengetriebegehäuse 214 koppelbar und/oder mit dem Zwischengetriebegehäuse 214 lösbar verbindbar sein. Das Getriebe 20 umfasst weiter eine Reversiereinheit 120. Die Reversiereinheit 120 wiederum weist einen ersten Radsatz 640 mit einem ersten Losrad 644 und einem ersten Festrad 642 und einen zweiten Radsatz 650 mit einem zweiten Losrad 654 und einem zweiten Festrad 652 auf. Der erste und zweite Festrad 642, 652 sind mit dem dritten Zwischenelement 672 verbunden, insbesondere drehfest verbunden. Das erste und zweite Losrad 644, 654 sind mit dem ersten Abtriebselement 32 und/oder dem zweiten Abtriebselement 190 lösbar verbunden oder verbindbar, insbesondere lösbar drehfest und/oder antreibbar verbunden oder verbindbar. Das erste Losrad 644 kämmt mit dem ersten Festrad 642, befindet sich also insbesondere in ständigem Kämmeingriff mit diesem. Das zweite Losrad 654 kämmt mit dem zweiten Festrad 652, befindet sich also insbesondere in ständigem Kämmeingriff mit diesem. Der zweite Radsatz 650 umfasst ein Zwischenzahnrad 656. Das Zwischenzahnrad 656 kann zur Umkehr der Drehrichtung des zweiten Radsatzes 650 ausgebildet sein. Die Reversiereinheit umfasst genau zwei Schaltelemente, die betätigbar sind, bevorzugt selektiv betätigbar, besonders bevorzugt schliessbar und lösbar und/oder einrückbar und/oder schaltbar und/oder selektiv eingreifbar sind, um das zweite gemeinsame Hohlrad 686, und insbesondere das dritte Zwischenelement 672, über den ersten oder zweiten Radsatz 640, 650 mit dem ersten Abtriebselement 32 und/oder dem zweiten Abtriebselement 190 zu verbinden. Die zwei Schaltelemente der Reversiereinheit sind eine achte und neunte C8, C9. Das erste Losrad 644 ist mit der achten Kupplung C8 und/oder dem ersten Abtriebselement 32 und/oder dem zweiten Abtriebselement 190 verbunden oder verbindbar, bevorzugt drehfest und/oder antreibbar verbunden oder verbindbar. Das zweite Losrad 654 ist mit der neunten Kupplung C9 und/oder dem ersten Abtriebselement 32 und/oder dem zweiten Abtriebselement 190 verbunden oder verbindbar, bevorzugt drehfest und/oder antreibbar verbunden oder verbindbar. Das zweite gemeinsame Hohlrad 686, und insbesondere das dritte Zwischenelement 672, sind über den ersten Radsatz 640 und mit der achten oder über die achte Kupplung C8 mit dem ersten Abtriebselement 32 und/oder dem zweiten Abtriebselement 190 lösbar verbindbar, insbesondere lösbar drehfest und/oder antreibbar verbindbar. Das zweite gemeinsame Hohlrad 686, und insbesondere das dritte Zwischenelement 672, sind über den zweiten Radsatz 650 und mit der neunten oder über die neunte Kupplung C9 mit dem ersten Abtriebselement 32 und/oder dem zweiten Abtriebselement 190 lösbar verbindbar, insbesondere lösbar drehfest und/oder antreibbar verbindbar, wobei die Drehrichtung des zweiten Losrads 654 umkehrbar oder umgekehrt zur Drehrichtung des ersten Losrads 644 ist. Das erste Losrad 644 ist mit der achten Kupplung C8 oder über die achte Kupplung C8 und/oder das zweite Losrad 654 mit der neunten Kupplung C9 oder über die neunte Kupplung C9 mit dem ersten Abtriebselement 32 und/oder dem zweiten Abtriebselement 190 lösbar verbindbar.

Somit sind mindestens, insbesondere genau, drei Schaltelemente B1, B2, B3, C1, C2, C3, C4 der Hauptgetriebeeinheit 22 und mindestens, insbesondere genau, zwei Schaltelemente B4', B5, C5', C6', C7' des Zwischengetriebes 150 und mindestens, insbesondere genau, ein Schaltelement C8, C9 der Reversiereinheit 120 in Kombinationen von mindestens, insbesondere genau, sechs Schaltelementen betätigbar, bevorzugt selektiv betätigbar, besonders bevorzugt schliessbar und lösbar und/oder einrückbar und/oder schaltbar und/oder selektiv eingreifbar, um mindestens, insbesondere genau, sechsunddreissig Vorwärtsgänge, und insbesondere mindestens oder genau sechsunddreissig Rückwärtsgänge, zwischen dem Antriebselement 30 und dem ersten Abtriebselement 32 und/oder dem zweiten Abtriebselement 190 herzustellen. Es kann aber auch nur ein Teil der 36 (sechsunddreissig) Rückwärtsgänge, also weniger als 36 (sechsunddreissig) Rückwärtsgänge, tatsächlich verwendet werden.

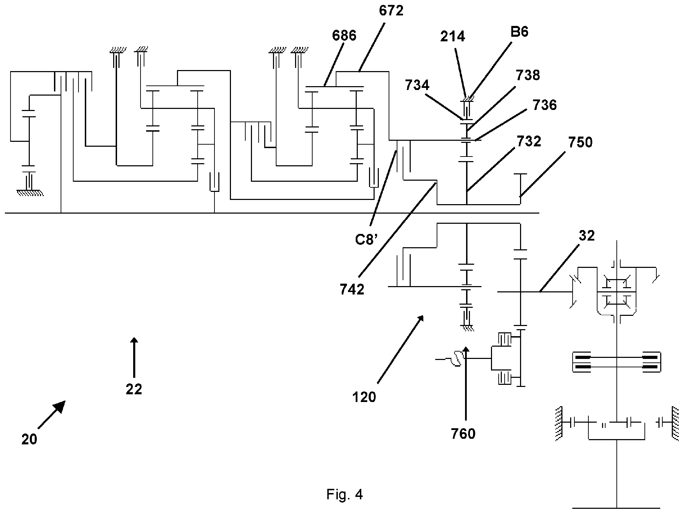

Figur 4 zeigt eine schematische Darstellung eines dritten Ausführungsbeispiels des erfindungsgemässen Getriebes 20. Das in Figur 4 gezeigte Getriebe 20 entspricht im Wesentlichen den in den Figuren 1 bis 3 gezeigten Getrieben 20, sodass im Folgenden lediglich auf Details und/oder Unterschiede eingegangen wird. Das Nutzfahrzeug 10 gemäss Figur 1 kann das Getriebe 20, wie in Figur 4 dargestellt, umfassen. Die Reversiereinheit 120 kann auch gemäss dem dritten Ausführungsbeispiel ausgebildet sein. Die Reversiereinheit 120 umfasst dann einen sechsten Planetenradsatz 760 mit einem sechsten Sonnenrad 732, einem sechsten Hohlrad 734, einem sechsten Planetenträger 736 und einem sechsten Planetensatz 738. Die Reversiereinheit 120 kann parallel oder koaxial zum Antriebselement 30 und/oder dem ersten Abtriebselement 32 angeordnet sein. Die Reversiereinheit 120 umfasst genau zwei Schaltelemente B6, C8', die betätigbar sind, bevorzugt selektiv betätigbar, besonders bevorzugt schliessbar und lösbar und/oder einrückbar und/oder schaltbar und/oder selektiv eingreifbar sind, um das zweite gemeinsame Hohlrad 686, und insbesondere das dritte Zwischenelement 672 mit dem sechsten Sonnenrad 732 zu verbinden oder um das sechste Hohlrad 734 gegen Drehung zu halten. Die Schaltelemente der Reversiereinheit 120 sind eine achte Kupplung C8' und eine sechste Bremse B6. Das zweite gemeinsame Hohlrad 686, und insbesondere das dritte Zwischenelement 672, ist mit dem sechsten Planetenträger 736 und/oder der achten Kupplung C8' verbunden oder verbindbar, bevorzugt drehfest und/oder antreibbar verbunden oder verbindbar. Das sechste Sonnenrad 732 ist mit der achten Kupplung C8' und/oder dem zweiten Zwischenelement 750, und insbesondere dem ersten Abtriebselement 32, verbunden oder verbindbar, bevorzugt drehfest und/oder antreibbar verbunden oder verbindbar. Das Getriebe 20, insbesondere die Reversiereinheit 120, kann ein zwölftes Verbindungselement 742, insbesondere eine zwölfte Verbindungswelle umfassen. Das zwölfte Verbindungselement 742 kann mit dem sechsten Sonnenrad 732 und/oder der achten Kupplung C8' und/oder dem zweiten Zwischenelement 750, und insbesondere dem ersten Abtriebselement 32, verbunden oder verbindbar sein, bevorzugt drehfest und/oder antreibbar verbunden oder verbindbar sein. Der sechste Planetenträger 736 und das zweite gemeinsame Hohlrad 686, und insbesondere das dritte Zwischenelement 672, sind mit der achten oder über die achte Kupplung C8' mit dem sechsten Sonnenrad 732, und insbesondere dem zwölften Zwischenelement 742 und/oder dem zweiten Zwischenelement 750, und insbesondere dem ersten Abtriebselement 32, lösbar verbindbar, insbesondere lösbar drehfest und/oder antreibbar verbindbar. Das sechste Hohlrad 734 ist mit der sechsten Bremse B6 gegen Drehung haltbar, bevorzugt lösbar gegen Drehung haltbar. Das sechste Hohlrad 734 kann mit der sechsten Bremse B6 an das Reversiereinheitsgehäuse 214, koppelbar und/oder mit diesem lösbar verbindbar sein.

Somit sind mindestens, insbesondere genau, drei Schaltelemente B1, B2, B3, C1, C2, C3, C4 der Hauptgetriebeeinheit 22 und mindestens, insbesondere genau, zwei Schaltelemente B4', B5, C5', C6', C7' des Zwischengetriebes 150 und mindestens, insbesondere genau, ein Schaltelement B6, C8' der Reversiereinheit 120 in Kombinationen von mindestens, insbesondere genau, sechs Schaltelementen betätigbar, bevorzugt selektiv betätigbar, besonders bevorzugt schliessbar und lösbar und/oder einrückbar und/oder schaltbar und/oder selektiv eingreifbar, um mindestens, insbesondere genau, sechsunddreissig Vorwärtsgänge, und insbesondere mindestens oder genau sechsunddreissig Rückwärtsgänge, zwischen dem Antriebselement 30 und dem ersten Abtriebselement 32 und/oder dem zweiten Abtriebselement 190 herzustellen. Es kann aber auch nur ein Teil der sechsunddreissig Rückwärtsgänge, also weniger als sechsunddreissig Rückwärtsgänge, tatsächlich verwendet werden.

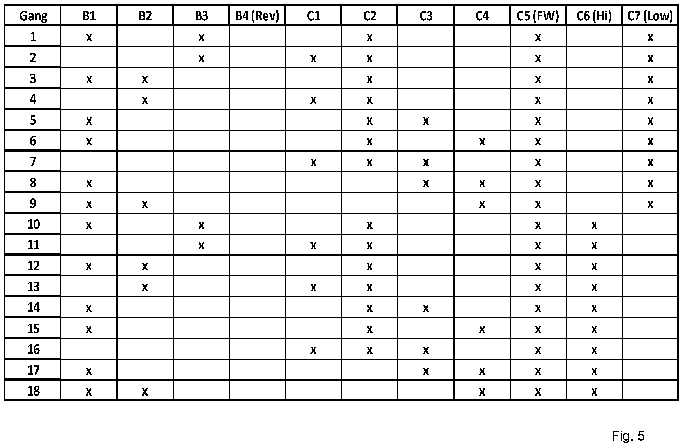

Figur 5 zeigt eine schematische Darstellung eines Schaltschemas des ersten Ausführungsbeispiels. Das Schaltschema zeigt nur die 18 (achtzehn) Vorwärtsgänge. Die 18 (achtzehn) Rückwärtsgänge ergeben sich, wenn die fünfte Kupplung C5 betätigt wird, insbesondere gelöst wird, und die vierte Bremse B4 betätigt wird, insbesondere geschlossen wird. Gemäss dem Schaltschemas ergibt sich der erste Vorwärtsgang durch Betätigen, insbesondere das Schließen, der ersten Bremse B1 und der dritten Bremse B3 und der zweiten Kupplung C2 und der fünften Kupplung C5 und der siebten Kupplung C7. Der zweite Vorwärtsgang ergibt sich durch Betätigen, insbesondere das Schließen, der dritten Bremse B3 und der ersten Kupplung C1 und der zweiten Kupplung C2 und der fünften Kupplung C5 und der siebten Kupplung C7. Das Schalten vom ersten Vorwärtsgang in den zweiten Vorwärtsgang erfolgt, indem die ersten Bremse B1 betätigt wird, insbesondere gelöst wird, und die erste Kupplung C1 betätigt wird, insbesondere geschlossen wird. Der dritte Vorwärtsgang ergibt sich durch Betätigen, insbesondere das Schließen, der ersten Bremse B1 und der zweiten Bremse B2 und der zweiten Kupplung C2 und der fünften Kupplung C5 und der siebten Kupplung C7. Das Schalten vom zweiten Vorwärtsgang in den dritten Vorwärtsgang erfolgt, indem die dritte Bremse B3 und die erste Kupplung betätigt werden, insbesondere gelöst werden, und die erste und zweite Bremse B1, B2 betätigt werden. Der vierte Vorwärtsgang ergibt sich durch Betätigen, insbesondere das Schließen, der zweiten Bremse B2 und der ersten Kupplung C1 und der zweiten Kupplung C2 und der fünften Kupplung C5 und der siebten Kupplung C7. Das Schalten vom dritten Vorwärtsgang in den vierten Vorwärtsgang erfolgt, indem die erste Bremse B1 betätigt wird, insbesondere gelöst werden, und die erste Kupplung C1 betätigt wird, insbesondere geschlossen wird. Der fünfte Vorwärtsgang ergibt sich durch Betätigen, insbesondere das Schließen, der ersten Bremse B1 und der zweiten Kupplung C2 und der dritten Kupplung C3 und der fünften Kupplung C5 und der siebten Kupplung C7. Das Schalten vom vierten Vorwärtsgang in den fünften Vorwärtsgang erfolgt, indem die zweite Bremse B2 und die erste Kupplung C1 betätigt werden, insbesondere gelöst werden, und die erste Bremse B1 und zweite Kupplung C2 betätigt werden, insbesondere geschlossen werden. Der sechste Vorwärtsgang ergibt sich durch Betätigen, insbesondere das Schließen, der ersten Bremse B1 und der zweiten Kupplung C2 und der vierten Kupplung C4 und der fünften Kupplung C5 und der siebten Kupplung C7. Das Schalten vom fünften Vorwärtsgang in den sechsten Vorwärtsgang erfolgt, indem die dritte Kupplung C3 betätigt wird, insbesondere gelöst wird, und die vierte Kupplung C4 betätigt wird, insbesondere geschlossen wird. Der siebte Vorwärtsgang ergibt sich durch Betätigen, insbesondere das Schließen, der der ersten Kupplung C1 und der zweiten Kupplung C2 und dritten Kupplung C3 und der fünften Kupplung C5 und der siebten Kupplung C7. Das Schalten vom sechsten Vorwärtsgang in den siebten Vorwärtsgang erfolgt, indem die erste Bremse B1 und die vierte Kupplung C4 betätigt werden, insbesondere gelöst werden, und die erste und dritte Bremse Kupplung C1, C3 betätigt werden, insbesondere geschlossen werden. Der achte Vorwärtsgang ergibt sich durch Betätigen, insbesondere das Schließen, der ersten Bremse B1 und der dritten Kupplung C3 und der vierten Kupplung C4 und der fünften Kupplung C5 und der siebten Kupplung C7. Das Schalten vom siebten Vorwärtsgang in den achten Vorwärtsgang erfolgt, indem die erste Kupplung C1 betätigt, insbesondere gelöst wird, und die erste Bremse B1 und die vierte Kupplung C4 betätigt, insbesondere geschlossen werden. Der neunte Vorwärtsgang ergibt sich durch Betätigen, insbesondere das Schließen, der ersten Bremse B1 und der zweiten Bremse B2 und der vierten Kupplung C4 und der fünften Kupplung C5 und der siebten Kupplung C7. Das Schalten vom achten Vorwärtsgang in den neunten Vorwärtsgang erfolgt, indem die dritte Kupplung C3 betätigt wird, insbesondere gelöst wird, und die zweite Bremse B2 betätigt, insbesondere geschlossen wird. Der zehnte Vorwärtsgang ergibt sich durch Betätigen, insbesondere das Schließen, der ersten und dritten Bremse B1, B3 und der zweiten Kupplung C2 und der fünften Kupplung C5 und der sechsten Kupplung C6. Das Schalten vom neunten Vorwärtsgang in den zehnten Vorwärtsgang erfolgt, indem die zweite Bremse B2 und vierte Kupplung C4 betätigt, insbesondere gelöst werden, und die dritte Bremse B3 und die zweite Kupplung C2 betätigt, insbesondere geschlossen werden. Der elfte Vorwärtsgang ergibt sich durch Betätigen, insbesondere das Schließen, der dritten Bremse B3 und der ersten und zweiten und fünften und sechsten Kupplung C1, C2, C5, C6. Das Schalten vom zehnten Vorwärtsgang in den elften Vorwärtsgang erfolgt, indem die erste Bremse B1 betätigt, insbesondere gelöst wird, und die erste Kupplung C1 betätigt, insbesondere geschlossen wird. Der zwölfte Vorwärtsgang ergibt sich durch Betätigen, insbesondere das Schließen, der ersten und zweiten Bremse B1, B2 und der zweiten und fünften und sechsten Kupplung C2, C5, C6. Das Schalten vom elften Vorwärtsgang in den zwölften Vorwärtsgang erfolgt, indem die dritte Bremse B3 und die erste Kupplung C1 betätigt, insbesondere gelöst werden, und die erste und zweite Bremse B1, B2 betätigt, insbesondere geschlossen werden. Der dreizehnte Vorwärtsgang ergibt sich durch Betätigen, insbesondere das Schließen, der zweiten Bremse B2 und der ersten und zweiten und fünften und sechsten Kupplung C1, C2, C5, C6. Das Schalten vom zwölften Vorwärtsgang in den dreizehnten Vorwärtsgang erfolgt, indem die erste Bremse B1 betätigt, insbesondere gelöst wird, und die erste Kupplung C1 betätigt, insbesondere geschlossen wird. Der vierzehnte Vorwärtsgang ergibt sich durch Betätigen, insbesondere das Schließen, der ersten Bremse B1 und der zweiten und dritten und fünften und sechsten Kupplung C2, C3, C5, C6. Das Schalten vom dreizehnten Vorwärtsgang in den vierzehnten Vorwärtsgang erfolgt, indem die zweite Bremse B2 und die erste Kupplung C1 betätigt, insbesondere gelöst werden, und die erste Bremse B1 und die dritte Kupplung C3 betätigt, insbesondere geschlossen werden. Der fünfzehnte Vorwärtsgang ergibt sich durch Betätigen, insbesondere das Schließen, der ersten Bremse B1 und der zweiten und vierten und fünften und sechsten Kupplung C2, C4, C5, C6. Das Schalten vom vierzehnten Vorwärtsgang in den fünfzehnten Vorwärtsgang erfolgt, indem die dritte Kupplung C3 betätigt, insbesondere gelöst wird, und die vierte Kupplung C4 betätigt, insbesondere geschlossen wird. Der sechzehnte Vorwärtsgang ergibt sich durch Betätigen, insbesondere das Schließen, der ersten und zweiten und dritten und fünften und sechsten Kupplung C1, C2, C3, C5, C6. Das Schalten vom fünfzehnten Vorwärtsgang in den sechzehnten Vorwärtsgang erfolgt, indem die erste Bremse B1 und die vierte Kupplung C4 betätigt, insbesondere gelöst werden, und die erste und dritte Kupplung C1, C3 betätigt, insbesondere geschlossen werden. Der siebzehnte Vorwärtsgang ergibt sich durch Betätigen, insbesondere das Schließen, der ersten Bremse B1 und der dritten und vierten und fünften und sechsten Kupplung C3, C4, C5, C6. Das Schalten vom sechzehnten Vorwärtsgang in den siebzehnten Vorwärtsgang erfolgt, indem die erste und zweite Kupplung C1, C2 betätigt, insbesondere gelöst werden, und die erste Bremse B1 und die vierte Kupplung C4 betätigt, insbesondere geschlossen werden. Der achtzehnte Vorwärtsgang ergibt sich durch Betätigen, insbesondere das Schließen, der ersten und zweiten Bremse B1, B2 und der vierten und fünften und sechsten Kupplung C4, C5, C6. Das Schalten vom siebzehnten Vorwärtsgang in den achtzehnten Vorwärtsgang erfolgt, indem die dritte Kupplung C3 betätigt, insbesondere gelöst wird, und die zweite Bremse B2 betätigt, insbesondere geschlossen wird.

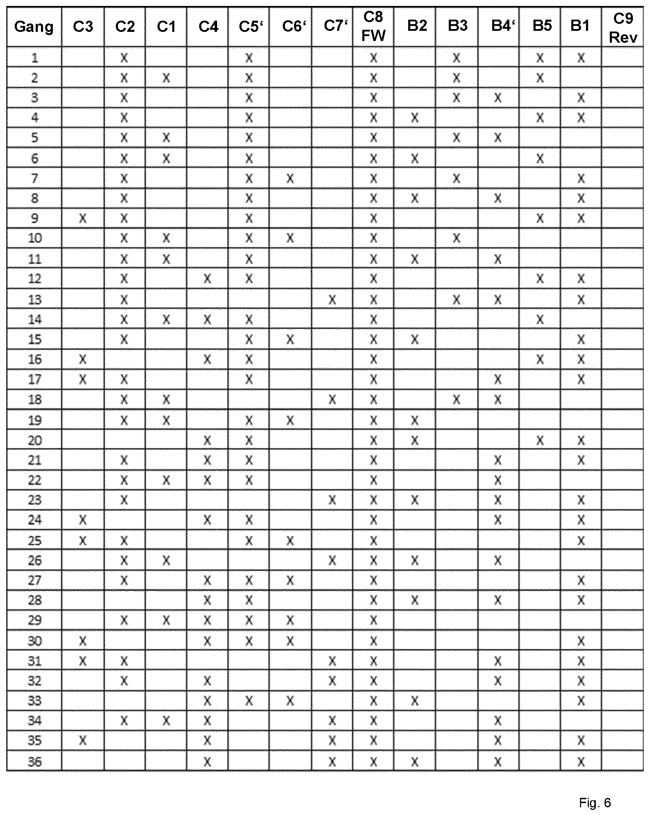

Figur 6 zeigt eine schematische Darstellung eines Schaltschemas des zweiten Ausführungsbeispiels. Das Schaltschema zeigt nur die 36 (sechsunddreissig) Vorwärtsgänge. Die entsprechenden 36 (sechsunddreissig) ergeben sich, wenn anstatt der achten Kupplung C8 die neunte Kupplung C9 betätigt wird, wenn also insbesondere die achte Kupplung C8 gelöst und die neunte Kupplung C9 geschlossen wird. Gemäss dem Schaltschemas ergibt sich der erste Vorwärtsgang durch Betätigen, insbesondere das Schließen, der ersten, dritten und fünften Bremse B1, B3, B5 und der zweiten und fünften und achten Kupplung C2, C5', C8. Der zweite Vorwärtsgang ergibt sich durch Betätigen, insbesondere das Schließen, der dritten und fünften Bremse B3, B5 und der ersten und zweiten und fünften und achten Kupplung C1, C2, C5', C8. Der dritte Vorwärtsgang ergibt sich durch Betätigen, insbesondere das Schließen, der ersten und dritten und vierten Bremse B1, B3, B4' und der zweiten und fünften und achten Kupplung C2, C5', C8. Der vierte Vorwärtsgang ergibt sich durch Betätigen, insbesondere das Schließen, der ersten und zweiten und fünften Bremse B1, B2, B5 und der zweiten und fünften und achten Kupplung C2, C5', C8. Der fünfte Vorwärtsgang ergibt sich durch Betätigen, insbesondere das Schließen, der dritten und vierten Bremse B3, B4' und der ersten und zweiten und fünften und achten Kupplung C1, C2, C5', C8. Der sechste Vorwärtsgang ergibt sich durch Betätigen, insbesondere das Schließen, der zweiten und fünften Bremse B2, B5 und der ersten und zweiten und fünften und achten Kupplung C1, C2, C5', C8. Der siebte Vorwärtsgang ergibt sich durch Betätigen, insbesondere das Schließen, der ersten und dritten Bremse B1, B3 und der zweiten und fünften und sechsten und achten Kupplung C2, C5', C6', C8. Der achte Vorwärtsgang ergibt sich durch Betätigen, insbesondere das Schließen, der ersten und zweiten und vierten Bremse B1, B2, B4' und der zweiten und fünften und achten Kupplung C2, C5', C8. Der neunte Vorwärtsgang ergibt sich durch Betätigen, insbesondere das Schließen, der ersten und fünften Bremse B1, B5 und der zweiten und dritten und fünften und achten Kupplung C2, C3, C5', C8. Der zehnte Vorwärtsgang ergibt sich durch Betätigen, insbesondere das Schließen, der dritten Bremse B3 und der ersten und zweiten und fünften und sechsten und achten Kupplung C1, C2, C5' C6', C8. Der elfte Vorwärtsgang ergibt sich durch Betätigen, insbesondere das Schließen, der zweiten und vierten Bremse B4' und der ersten und zweiten und fünften und sechsten und achten Kupplung C1, C2, C5' C6', C8. Der zwölfte Vorwärtsgang ergibt sich durch Betätigen, insbesondere das Schließen, der ersten und fünften Bremse B1, B5 und ersten Kupplung C1 und der zweiten und vierten und fünften und achten Kupplung C2, C4, C5', C8. Gemäss dem Schaltschemas ergibt sich der dreizehnte Vorwärtsgang durch Betätigen, insbesondere das Schließen, der ersten und dritten und vierten Bremse B1, B3, B4' und der zweiten und siebten und achten Kupplung C2, C7', C8. Der vierzehnte Vorwärtsgang ergibt sich durch Betätigen, insbesondere das Schließen, der fünften Bremse B5 und der ersten und zweiten und vierten und fünften und achten Kupplung C1, C2, C4, C5', C8. Der fünfzehnte Vorwärtsgang ergibt sich durch Betätigen, insbesondere das Schließen, der ersten, zweiten und fünften und sechsten und achten Kupplung C2, C5', C6', C8. Der sechzehnte Vorwärtsgang ergibt sich durch Betätigen, insbesondere das Schließen, der ersten und fünften Bremse und der dritten und vierten und fünften und achten Kupplung C3, C4, C5', C8. Der siebzehnte Vorwärtsgang ergibt sich durch Betätigen, insbesondere das Schließen, der ersten und vierten Bremse B1, B4' und der zweiten und dritten und fünften und achten Kupplung C2, C3, C5', C8. Der achtzehnte Vorwärtsgang ergibt sich durch Betätigen, insbesondere das Schließen, der dritten und vierten Bremse B3, B4' und der ersten und zweiten und siebten und achten Kupplung C1, C2, C7', C8. Der neunzehnte Vorwärtsgang ergibt sich durch Betätigen, insbesondere das Schließen, der zweiten Bremse B2 und der ersten und zweiten und fünften und sechsten und achten Kupplung C1, C2, C5', C6', C8.

Der zwanzigste Vorwärtsgang ergibt sich durch Betätigen, insbesondere das Schließen, der ersten und zweiten und fünften Bremse B1, B2, B5 und der vierten und fünften und achten Kupplung C4, C5', C8. Der einundzwanzigste Vorwärtsgang ergibt sich durch Betätigen, insbesondere das Schließen, der ersten und vierten Bremse B1, B4' und der zweiten und vierten und fünften und achten Kupplung C2, C4, C5', C8. Der zweiundzwanzigste Vorwärtsgang ergibt sich durch Betätigen, insbesondere das Schließen, der vierten Bremse B4' und der ersten und zweiten und vierten und fünften und achten Kupplung C1, C2, C4, C5', C8. Der dreiundzwanzigste Vorwärtsgang ergibt sich durch Betätigen, insbesondere das Schließen, der ersten und zweiten und vierten Bremse B4' und der zweiten und siebten und achten Kupplung C2, C7', C8. Der vierundzwanzigste Vorwärtsgang ergibt sich durch Betätigen, insbesondere das Schließen, der ersten und vierten Bremse B1, B4' und der dritten und vierten und fünften und achten Kupplung C3, C4, C5', C8. Der fünfundzwanzigste Vorwärtsgang ergibt sich durch Betätigen, insbesondere das Schließen, der ersten Bremse B1 und der zweiten und dritten und fünften und sechsten und achten Kupplung C2, C3, C5', C6', C8. Der sechsundzwanzigste Vorwärtsgang ergibt sich durch Betätigen, insbesondere das Schließen, der zweiten und vierten Bremse B2, B4' und der ersten und zweiten und siebten und achten Kupplung C1, C2, C7', C8. Der siebenundzwanzigste Vorwärtsgang ergibt sich durch Betätigen, insbesondere das Schließen, der ersten Bremse B1 und der zweiten und vierten und fünften und sechsten und achten Kupplung C2, C4, C5', C6', C8. Der achtundzwanzigste Vorwärtsgang ergibt sich durch Betätigen, insbesondere das Schließen, der ersten und zweiten und vierten Bremse B1, B2, B4' und der vierten und fünften und achten Kupplung C4, C5', C8. Der neunundzwanzigste Vorwärtsgang ergibt sich durch Betätigen, insbesondere das Schließen, der ersten und zweiten und vierten und fünften und sechsten und achten Kupplung C1, C2, C4, C5', C6', C8. Der dreissigste Vorwärtsgang ergibt sich durch Betätigen, insbesondere das Schließen, der ersten Bremse B1 und der dritten und vierten und fünften und sechsten und achten Kupplung C3, C4, C5', C6', C8. Der einunddreissigste Vorwärtsgang ergibt sich durch Betätigen, insbesondere das Schließen, der ersten und vierten Bremse B1, B4' und der zweiten und dritten und siebten und achten Kupplung C2, C3, C7', C8. Der zweiunddreissigste Vorwärtsgang ergibt sich durch Betätigen, insbesondere das Schließen, der ersten und vierten Bremse B1, B4' und der zweiten und vierten und siebten und achten Kupplung C2, C4, C7', C8. Der dreiunddreissigste Vorwärtsgang ergibt sich durch Betätigen, insbesondere das Schließen, der ersten und zweiten Bremse B1, B2 und der vierten und fünften und sechsten und achten Kupplung C4, C5', C6', C8. Der vierunddreissigste Vorwärtsgang ergibt sich durch Betätigen, insbesondere das Schließen, der vierten Bremse B4' und der ersten und zweiten und vierten und siebten und achten Kupplung C1, C2, C4, C7', C8. Der fünfunddreissigste Vorwärtsgang ergibt sich durch Betätigen, insbesondere das Schließen, der ersten und vierten Bremse B4' und der dritten und vierten und siebten und achten Kupplung C3, C4, C7', C8. Der sechsunddreissigste Vorwärtsgang ergibt sich durch Betätigen, insbesondere das Schließen, der ersten und zweiten und vierten Bremse B1, B2, B4' und vierten und siebten und achten Kupplung C4, C7', C8.

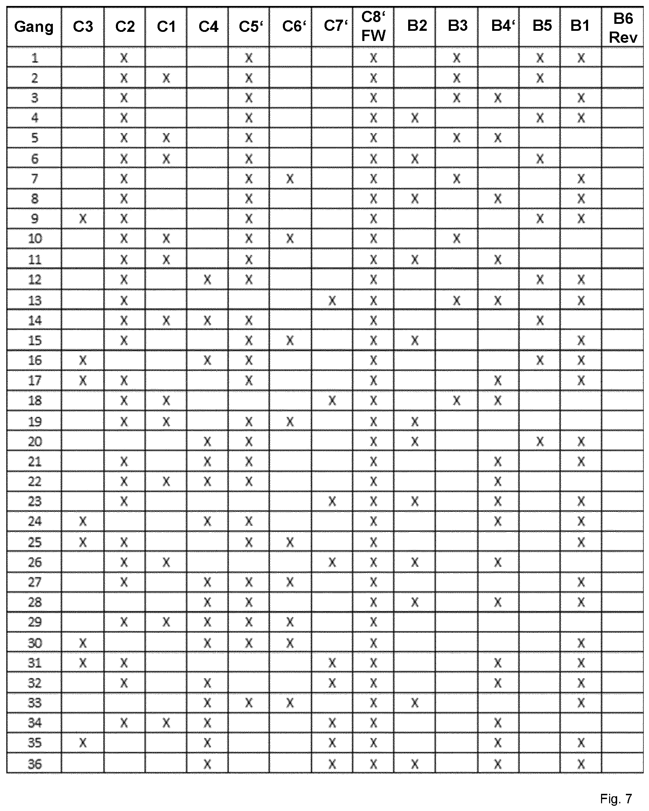

Figur 7 zeigt eine schematische Darstellung eines Schaltschemas des dritten Ausführungsbeispiels. Das in Figur 7 gezeigte Schaltschema entspricht im Wesentlichen dem in Figur 6 gezeigten Schaltschema, sodass im Folgenden lediglich auf Details und/oder Unterschiede eingegangen wird. Im Gegensatz zu dem in Figur 6 gezeigten Schaltschema, sind die Rückwärtsgänge mit der sechsten Bremse B6 anstatt mit der neunten Kupplung C9 herstellbar. Anstatt der neunten Kupplung C9 wird also die sechste Bremse B6 für das Schalten in den/die Rückwärtsgänge verwendet. Das Schaltschema zeigt nur die 36 (sechsunddreissig) Vorwärtsgänge. Ausserdem wird die achte Kupplung C8 des zweiten Ausführungsbeispiels durch die achte Kupplung C8' des dritten Ausführungsbeispiels ersetzt. Die entsprechenden 36 (sechsunddreissig) Rückwärtsgänge ergeben sich, wenn anstatt der achten Kupplung C8' die sechste Bremse B6 betätigt wird, wenn also insbesondere die achte Kupplung C8' gelöst und die sechste Bremse B6 geschlossen wird.

Die im Folgenden genannten Vorteile gelten für alle gezeigten Figuren. Von Vorteil wird mit dem erfindungsgemässen Getriebe 20, insbesondere da eine minimale Anzahl an Zahnrädern, Kupplungen und Bremsen für das Getriebe 20 benötigt wird, eine einfache konstruktive Ausbildung des Getriebes 20 und des Nutzfahrzeugs 10 erreicht, insbesondere auch in Bezug auf eine Leichtbauweise des Getriebes 20 und des Nutzfahrzeugs 10. Aufgrund der hohen Packungsdichte der Getriebekomponenten des Getriebes 20 in axiale und laterale Richtung weist das Getriebe 20 vorteilhafterweise eine kompakte Bauweise mit minimalem Bauraum auf. Ebenso wird zusätzlicher Bauraum für Bauteile außerhalb des Getriebes 20 ermöglicht. Gleichzeitig kann eine optimale Anzahl an Gängen erreicht werden. Darüber hinaus können die Materialkosten für das Getriebe 20 aufgrund der optimierten Bauweise reduziert werden.

## Patentansprüche

1. Getriebe zum Übertragen eines von einem Antriebsmotor (18) erzeugten Drehmoments auf mindestens eine vordere und/oder hintere Antriebsachse (14, 16) eines landwirtschaftlichen oder industriellen Nutzfahrzeugs (10), mit einem Antriebselement (30) und einem ersten Abtriebselement (32) und mit einer Hauptgetriebeeinheit (22), wobei die Hauptgetriebeeinheit (22) genau einen ersten Planetenradsatz (70) mit einem ersten Sonnenrad (72), einem ersten Hohlrad (74), einem ersten Planetenträger (76) und einem ersten Planetensatz (78), und einen zweiten Planetenradsatz (80) mit einem zweiten Sonnenrad (82), und einen dritten Planetenradsatz (90) mit einem dritten Sonnenrad (92) und einem dritten Planentensatz (94) umfasst, und wobei der zweite und dritte Planetenradsatz (80, 90) einen ersten gemeinsamen Planetensatz (84) und ein erstes gemeinsames Hohlrad (86) und einen ersten gemeinsamen Planetenträger (88) aufweisen, und die Hauptgetriebeeinheit (22) genau sieben Schaltelemente (B1, B2, B3, C1, C2, C3, C4) umfasst, **dadurch gekennzeichnet, dass** die Schaltelemente der Hauptgetriebeeinheit (22) eine erste Bremse (B1) und eine zweite Bremse (B2) und eine dritte Bremse (B3) und eine erste Kupplung (C1) und eine zweite Kupplung (C2) und eine dritte Kupplung (C3) und eine vierte Kupplung (C4) sind, und das Getriebe ein Zwischengetriebe mit mindestens zwei Schaltelementen (B4', B5, C5, C5', C6, C6', C7') und eine Reversiereinheit mit genau zwei Schaltelementen (B4, B6, C5, C8, C8', C9) umfasst, und genau drei Schaltelemente (B1, B2, B3, C1, C2, C3, C4) der Hauptgetriebeeinheit (22) und mindestens ein Schaltelement (B4', B5, C5, C5', C6, C6', C7') des Zwischengetriebes (150) und genau ein Schaltelement (B4, B6, C5, C8, C8', C9) der Reversiereinheit (120) in Kombinationen von mindestens fünf Schaltelementen (B1, B2, B3, B4, B4', B5, B6, C1, C2, C3, C4, C5, C5', C6, C6', C7, C7', C8, C9) betätigbar sind, um mindestens achtzehn Vorwärtsgänge zwischen dem Antriebselement (30) und dem ersten Abtriebselement (32) herzustellen, wobei die Reversiereinheit (120) in Richtung des Kraft- und Drehmomentflusses nach der Hauptgetriebeeinheit (22) angeordnet ist, und das Antriebselement (30) mit dem ersten Hohlrad (74) und der ersten Kupplung (C1) und der vierten Kupplung (C4) verbunden ist, und die vierte Kupplung (C4) mit dem ersten gemeinsamen Planetenträger (88) verbindbar ist.

2. Getriebe nach Anspruch 1, **dadurch gekennzeichnet, dass** das Zwischengetriebe (150) in Richtung des Kraft- und Drehmomentflusses nach der Hauptgetriebeeinheit (22) und vor der Reversiereinheit (120) angeordnet ist, oder die Reversiereinheit (120) in Richtung des Kraft- und Drehmomentflusses nach der Hauptgetriebeeinheit (22) und vor dem Zwischengetriebe (150) angeordnet ist.

3. Getriebe nach mindestens einem der Ansprüche 1 bis 2, **dadurch gekennzeichnet, dass** die Reversiereinheit (120) einen vierten Planetenradsatz (130) mit einem vierten Sonnenrad (132), einem vierten Hohlrad (134), einem vierten Planetenträger (136) und einem vierten Planetensatz (138) umfasst.

4. Getriebe nach Anspruch 3, **dadurch gekennzeichnet, dass** das Zwischengetriebe (150) einen fünften Planetenradsatz (160) mit einem fünften Sonnenrad (162), einem fünften Hohlrad (164), einem fünften Planetenträger (166) und einem fünften Planetensatz (168) aufweist.

5. Getriebe nach mindestens einem der Ansprüche Anspruch 3 bis 4, **dadurch gekennzeichnet, dass** die Schaltelemente der Reversiereinheit (120) eine fünfte Kupplung (C5) und eine vierte Bremse (B4) sind.

6. Getriebe nach mindestens einem der Ansprüche 3 bis 5, **dadurch gekennzeichnet, dass** die Schaltelemente des Zwischengetriebes (150) eine sechste Kupplung (C6) und eine siebte Kupplung (C7) sind.

7. Getriebe nach mindestens einem der Ansprüche 1 bis 2, **dadurch gekennzeichnet, dass** das Zwischengetriebe (150) einen vierten Planetenradsatz (620) mit einem vierten Sonnenrad (622), und einen fünften Planetenradsatz (630) mit einem fünften Sonnenrad (632) und einem fünften Planentensatz (634) umfasst, wobei der vierte und fünfte Planetenradsatz (620, 630) einen zweiten gemeinsamen Planetensatz (684) und ein zweites gemeinsames Hohlrad (686) und einen zweiten gemeinsamen Planetenträger (636) aufweisen.

8. Getriebe nach Anspruch 7, **dadurch gekennzeichnet, dass** die Schaltelemente des Zwischengetriebes (150) eine fünfte Kupplung (C5') und eine sechste Kupplung (C6') und eine siebte Kupplung (C7') und eine vierte und fünfte Bremse (B4', B5) sind.

9. Getriebe nach mindestens einem der Ansprüche 7 bis 8, **dadurch gekennzeichnet, dass** die Reversiereinheit (120) einen sechsten Planetenradsatz (760) mit einem sechsten Sonnenrad (732), einem sechsten Hohlrad (734), einem sechsten Planetenträger (736) und einem sechsten Planetensatz (738) umfasst, und die Schaltelemente der Reversiereinheit (120) eine achte Kupplung (C8) und eine sechste Bremse (B6) sind.

10. Getriebe nach mindestens einem der Ansprüche 7 bis 8, **dadurch gekennzeichnet, dass** die Reversiereinheit (120) einen ersten Radsatz (640) mit einem ersten Losrad (644) und einem ersten Festrad (642) und einen zweiten Radsatz (650) mit einem zweiten Losrad (654) und einem zweiten Festrad (652) umfasst, und die Schaltelemente der Reversiereinheit (120) eine achte und neunte Kupplung (C8', C9) sind.

11. Getriebe nach mindestens einem der vorangehenden Ansprüche, **dadurch gekennzeichnet, dass** das Getriebe (20) ein Zapfwellenmodul (26) umfasst, und/oder ein Hinterachsmodul (24) zwischen dem Zapfwellenmodul (26) und der Hauptgetriebeeinheit (22) angeordnet ist, und/oder das Getriebe (20) eine Zapfwellen-Antriebswelle (230) umfasst.

12. Getriebe nach mindestens einem der vorangehenden Ansprüche, **dadurch gekennzeichnet, dass** das erste Abtriebselement (32) mit einem zweiten Zwischenelement (170) antreibbar verbunden oder verbindbar ist.

13. Landwirtschaftliches oder industrielles Nutzfahrzeug, insbesondere ein Traktor oder Schlepper, umfassend ein Getriebe (20) nach einem der Ansprüche 1 bis 12.

14. Landwirtschaftliches oder industrielles Nutzfahrzeug nach Anspruch 13, **dadurch gekennzeichnet, dass** das Getriebe (20) derart im Nutzfahrzeug (10) angeordnet ist, dass eine Getriebelängsachse (280) im Wesentlichen parallel oder koaxial zu einer Fahrzeuglängsachse (52) ist.

## Claims

1. Transmission for transmitting a torque generated by a drive motor (18) to at least one front and/or rear drive axle (14, 16) of an agricultural or industrial commercial vehicle (10), with a drive element (30) and a first output element (32) and with a main transmission unit (22), wherein the main transmission unit (22) comprises exactly one first planetary gear set (70) with a first sun gear (72), a first ring gear (74), a first planet carrier (76) and a first planetary set (78), and a second planetary gear set (80) with a second sun gear (82), and a third planetary gear set (90) with a third sun gear (92) and a third planetary set (94), and wherein the second and third planetary gear set (80, 90) have a first common planetary set (84) and a first common ring gear (86) and a first common planet carrier (88), and the main transmission unit (22) comprises exactly seven switching elements (B1, B2, B3, C1, C2, C3, C4), **characterized in that** the switching elements of the main transmission unit (22) are a first brake (B1) and a second brake (B2) and a third brake (B3) and a first clutch (C1) and a second clutch (C2) and a third clutch (C3) and a fourth clutch (C4), and the transmission comprises an intermediate transmission with at least two switching elements (B4', B5, C5, C5', C6, C6', C7') and a reversing unit with exactly two switching elements (B4, B6, C5, C8, C8', C9), and exactly three switching elements (B1, B2, B3, C1, C2, C3, C4) of the main transmission unit (22) and at least one switching element (B4', B5, C5, C5', C6, C6', C7') of the intermediate transmission (150) and exactly one switching element (B4, B6, C5, C8, C8', C9) of the reversing unit (120) are activatable in combinations of at least five switching elements (B1, B2, B3, B4, B4', B5, B6, C1, C2, C3, C4, C5, C5', C6, C6', C7, C7', C8, C9) to establish at least eighteen forward gears between the drive element (30) and the first output element (32), wherein the reversing unit (120) is disposed in the direction of the force and torque flux downstream of the main transmission unit (22), and the drive element (30) is connected to the first ring gear (74) and the first clutch (C1) and the fourth clutch (C4), and the fourth clutch (C4) is connectable to the first common planet carrier (88).

2. Transmission according to Claim 1, **characterized in that** the intermediate transmission (150) is disposed in the direction of the force and torque flux downstream of the main transmission unit (22) and upstream of the reversing unit (120), or the reversing unit (120) is disposed in the direction of the force and torque flux downstream of the main transmission unit (22) and upstream of the intermediate transmission (150).

3. Transmission according to at least one of Claims 1 to 2, **characterized in that** the reversing unit (120) comprises a fourth planetary gear set (130) with a fourth sun gear (132), a fourth ring gear (134), a fourth planet carrier (136) and a fourth planetary set (138).

4. Transmission according to Claim 3, **characterized in that** the intermediate transmission (150) has a fifth planetary gear set (160) with a fifth sun gear (162), a fifth ring gear (164), a fifth planet carrier (166) and a fifth planetary set (168).

5. Transmission according to at least one of Claims 3 to 4, **characterized in that** the switching elements of the reversing unit (120) are a fifth clutch (C5) and a fourth brake (B4).

6. Transmission according to at least one of Claims 3 to 5, **characterized in that** the switching elements of the intermediate transmission (150) are a sixth clutch (C6) and a seventh clutch (C7).

7. Transmission according to at least one of Claims 1 to 2, **characterized in that** the intermediate transmission (150) comprises a fourth planetary gear set (620) with a fourth sun gear (622), and a fifth planetary gear set (630) with a fifth sun gear (632) and a fifth planetary set (634), wherein the fourth and fifth planetary gear set (620, 630) have a second common planetary set (684) and a second common ring gear (686) and a second common planet carrier (636).

8. Transmission according to Claim 7, **characterized in that** the switching elements of the intermediate transmission (150) are a fifth clutch (C5') and a sixth clutch (C6') and a seventh clutch (C7') and a fourth and fifth brake (B4', B5).

9. Transmission according to at least one of Claims 7 to 8, **characterized in that** the reversing unit (120) comprises a sixth planetary gear set (760) with a sixth sun gear (732), a sixth ring gear (734), a sixth planet carrier (736) and a sixth planetary set (738), and the switching elements of the reversing unit (120) are an eighth clutch (C8) and a sixth brake (B6).

10. Transmission according to at least one of Claims 7 to 8, **characterized in that** the reversing unit (120) comprises a first gear set (640) with a first idler gear (644) and a first fixed gear (642), and a second gear set (650) with a second idler gear (654) and a second fixed gear (652), and the switching elements of the reversing unit (120) are an eighth and ninth clutch (C8', C9).

11. Transmission according to at least one of the preceding claims, **characterized in that** the transmission (20) comprises a power take-off module (26), and/or a rear axle module (24) is disposed between the power take-off module (26) and the main transmission unit (22), and/or the transmission (20) comprises a power take-off drive shaft (230).

12. Transmission according to at least one of the preceding claims, **characterized in that** the first output element (32) is connected or able to be connected in a drivable manner to a second intermediate element (170).

13. Agricultural or industrial commercial vehicle, in particular a tractor or hauler, comprising a transmission (20) according to one of Claims 1 to 12.

14. Agricultural or industrial commercial vehicle according to Claim 13, **characterized in that** the transmission (20) is disposed in the commercial vehicle (10) in such a way that a transmission longitudinal axis (280) is substantially parallel to or coaxial with a vehicle longitudinal axis (52).

## Revendications

1. Transmission destinée à transmettre un couple de rotation généré par un moteur d'entraînement (18) sur au moins un essieu d'entraînement avant et/ou arrière (14, 16) d'un véhicule utilitaire agricole ou industriel (10), avec un élément d'entraînement (30) et un premier élément de sortie (32) et avec une unité de transmission principale (22), l'unité de transmission principale (22) comprenant exactement un premier train de pignons satellites (70) avec une première roue solaire (72), une première couronne (74), un premier porte-pignons satellites (76) et un premier train planétaire (78), et un deuxième train de pignons satellites (80) avec une deuxième roue solaire (82), et un troisième train de pignons satellites (90) avec une troisième roue solaire (92) et un troisième train planétaire (94), et le deuxième et le troisième train de pignons satellites (80, 90) comportant un premier train planétaire commun (84) et une première couronne commune (86) et un premier porte-pignons satellites commun (88), et l'unité de transmission principale (22) comprenant exactement sept éléments de changement de vitesse (B1, B2, B3, C1, C2, C3, C4), **caractérisée en ce que** les éléments de changement de vitesse de l'unité de transmission principale (22) sont un premier frein (B1) et un deuxième frein (B2) et un troisième frein (B3) et un premier embrayage (C1) et un deuxième embrayage (C2) et un troisième embrayage (C3) et un quatrième embrayage (C4), et la transmission comprend une transmission intermédiaire avec au moins deux éléments de changement de vitesse (B4', B5, C5, C5', C6, C6', C7') et une unité d'inversion avec exactement deux éléments de changement de vitesse (B4, B6, C5, C8, C8', C9), et exactement trois éléments de changement de vitesse (B1, B2, B3, C1, C2, C3, C4) de l'unité de transmission principale (22) et au moins un élément de changement de vitesse (B4', B5, C5, C5', C6, C6', C7') de la transmission intermédiaire (150) et exactement un élément de changement de vitesse (B4, B6, C5, C8, C8', C9) de l'unité d'inversion (120) peuvent être actionnés dans des combinaisons d'au moins cinq éléments de changement de vitesse (B1, B2, B3, B4, B4', B5, B6, C1, C2, C3, C4, C5, C5', C6, C6', C7, C7', C8, C9) pour établir au moins dix-huit rapports de marche avant entre l'élément d'entraînement (30) et le premier élément de sortie (32), l'unité d'inversion (120) étant disposée après l'unité de transmission principale (22) en direction du flux de force et de couple de rotation, et l'élément d'entraînement (30) étant relié à la première couronne (74) et au premier embrayage (C1) et au quatrième embrayage (C4), et le quatrième embrayage (C4) pouvant être relié au premier porte-pignons satellites commun (88).

2. Transmission selon la revendication 1, **caractérisée en ce que** la transmission intermédiaire (150) est disposée après l'unité de transmission principale (22) et avant l'unité d'inversion (120) en direction du flux de force et de couple de rotation, ou l'unité d'inversion (120) est disposée après l'unité de transmission principale (22) et avant la transmission intermédiaire (150) en direction du flux de force et de couple de rotation.

3. Transmission selon au moins l'une des revendications 1 à 2, **caractérisée en ce que** l'unité d'inversion (120) comprend un quatrième train de pignons satellites (130) avec une quatrième roue solaire (132), une quatrième couronne (134), un quatrième porte-pignons satellites (136) et un quatrième train planétaire (138).

4. Transmission selon la revendication 3, **caractérisée en ce que** la transmission intermédiaire (150) comporte un cinquième train de pignons satellites (160) avec une cinquième roue solaire (162), une cinquième couronne (164), un cinquième porte-pignons satellites (166) et un cinquième train planétaire (168).

5. Transmission selon au moins l'une des revendications 3 à 4, **caractérisée en ce que** les éléments de changement de vitesse de l'unité d'inversion (120) sont un cinquième embrayage (C5) et un quatrième frein (B4).

6. Transmission selon au moins l'une des revendications 3 à 5, **caractérisée en ce que** les éléments de changement de vitesse de la transmission intermédiaire (150) sont un sixième embrayage (C6) et un septième embrayage (C7).

7. Transmission selon au moins l'une des revendications 1 à 2, **caractérisée en ce que** la transmission intermédiaire (150) comprend un quatrième train de pignons satellites (620) avec une quatrième roue solaire (622), et un cinquième train de pignons satellites (630) avec une cinquième roue solaire (632), et un cinquième train de pignons satellites (634), le quatrième et le cinquième train de pignons satellites (620, 630) comportant un deuxième train planétaire commun (684) et une deuxième couronne commune (686) et un deuxième porte-pignons satellites commun (636).

8. Transmission selon la revendication 7, **caractérisée en ce que** les éléments de changement de vitesse de la transmission intermédiaire (150) sont un cinquième embrayage (C5') et un sixième embrayage (C6') et un septième embrayage (C7') et un quatrième et un cinquième frein (B4', B5).

9. Transmission selon au moins l'une des revendications 7 à 8, **caractérisée en ce que** l'unité d'inversion (120) comprend un sixième train de pignons satellites (760) avec une sixième roue solaire (732), une sixième couronne (734), un sixième porte-pignons satellites (736) et un sixième train planétaire (738), et/ou les éléments de changement de vitesse de l'unité d'inversion (120) sont un huitième embrayage (C8) et un sixième frein (B6).

10. Transmission selon au moins l'une des revendications 7 à 8, **caractérisée en ce que** l'unité d'inversion (120) comprend un premier train de pignons (640) avec un premier pignon fou (644) et un premier pignon fixe (642) et un deuxième train de pignons (650) avec un deuxième pignon fou (654) et un deuxième pignon fixe (652), et les éléments de changement de vitesse de l'unité d'inversion (120) sont un huitième et un neuvième embrayage (C8', C9).

11. Transmission selon au moins l'une des revendications précédentes, **caractérisée en ce que** la transmission (20) comprend un module de prise de force (26) et/ou un module d'essieu arrière (24) est disposé entre le module de prise de force (26) et l'unité de transmission principale (22), et/ou la transmission (20) comprend un arbre d'entraînement de prise de force (230).

12. Transmission selon au moins l'une des revendications précédentes, **caractérisée en ce que** le premier élément de sortie (32) est relié ou peut être relié de manière à pouvoir être entraîné à un deuxième élément intermédiaire (170).

13. Véhicule utilitaire agricole ou industriel, en particulier tracteur ou semi-remorque, comprenant une transmission (20) selon l'une des revendications 1 à 12.

14. Véhicule utilitaire agricole ou industriel selon la revendication 13, **caractérisé en ce que** la transmission (20) est disposée de telle manière dans le véhicule utilitaire (10) qu'un essieu longitudinal de transmission (280) est sensiblement parallèle ou coaxial à un essieu longitudinal de véhicule (52).
